# EUROPEAN PATENT APPLICATION

(11) **EP 4 836 510 A1**
(43) Date of publication of application: **04.11.2026**
(21) Application number: 23962643.5
(22) Date of filing: 27.12.2023
(51) Int. Cl.: H04W 28/02, H04W 88/06

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Taor, Simon Edward William
(86) International application number: PCT/CN2023/142494
(87) International publication number: WO 2025/137960

(57) **Abstract**

The present application relates to a communication method, a device, a computer readable storage medium, a computer program product, and a computer program. The method comprises: a terminal sending execution indication information, the execution indication information being used to indicate that data transmission control be executed on a first 3GPP user plane connection, and the first 3GPP user plane connection being one of multiple 3GPP user plane connections supported and established by the terminal.

## Description

### TECHNICAL FIELD

The present disclosure relates to the field of communication, and more particularly, to a method for communication, a device, a computer readable storage medium, a computer program product, and a computer program.

### BACKGROUND

In the related art, the prerequisite for enabling one 3rd Generation Partnership Project (3GPP) user plane connection and one non-3GPP user plane connection to jointly correspond to a PDU session is that the UE can establish control plane connections via both 3GPP access and non-3GPP access, and the signaling procedures related to the establishment of the two user plane connections can also interact over the two control plane connections respectively. However, in the related art, a terminal cannot support the establishment or maintenance of multiple 3GPP user plane connections via multiple 3GPP accesses, nor can it control data transmission over different 3GPP user plane connections in a scenario where the terminal supports multiple 3GPP user plane connections.

### SUMMARY

The present disclosure relates to a method for communication, a device, a computer-readable storage medium, a computer program product, and a computer program.

An embodiment of the present disclosure provides a method for communication, which includes: a terminal sends execution indication information, where the execution indication information indicates that data transmission control is performed on a first 3GPP user plane connection, and the first 3GPP user plane connection is one of a plurality of 3GPP user plane connections that the terminal supports to establish.

An embodiment of the present disclosure provides a method for communication, which includes: a core network element receives execution indication information, where the execution indication information indicates that data transmission control is performed on a first 3GPP user plane connection of a terminal, and the first 3GPP user plane connection is one of a plurality of 3GPP user plane connections that the terminal supports to establish.

An embodiment of the present disclosure provides a terminal, which includes: a first communication unit, configured to send execution indication information, wherein the execution indication information indicates that data transmission control is performed on a first 3GPP user plane connection, and the first 3GPP user plane connection is one of a plurality of 3GPP user plane connections that the terminal supports to establish.

An embodiment of the present disclosure provides a core network element, which includes: a second communication unit, configured to receive execution indication information, where the execution indication information indicates that data transmission control is performed on a first 3GPP user plane connection of a terminal, and the first 3GPP user plane connection is one of a plurality of 3GPP user plane connections that the terminal supports to establish.

An embodiment of the present disclosure provides a terminal including a transceiver, a processor, and a memory. The memory being configured to store a computer program, the transceiver being configured to communicate with other devices, the processor being configured to call and execute the computer program stored in the memory to cause the terminal to perform the method described above.

An embodiment of the present disclosure provides a core network element including a transceiver, a processor and a memory. The memory is configured to store a computer program, the transceiver being configured to communicate with other devices, the processor being configured to call and execute the computer program stored in the memory to cause the core network element to perform the method described above.

An embodiment of the present disclosure provides a chip for implementing the above method.

Specifically, the chip includes a processor for calling and executing a computer program from a memory, to cause a device installed with the chip to perform the method described above.

An embodiment of the present disclosure provides a computer-readable storage medium for storing a computer program that, when executed by a device, causes the device to perform the method described above.

An embodiment of the present disclosure provides a computer program product including computer program instructions that cause a computer to perform the method described above.

An embodiment of the present disclosure provides a computer program that, when executed on a computer, causes the computer to perform the method described above.

It can be seen that by adopting the scheme provided by the embodiments, when the terminal supports establishing a plurality of 3GPP user plane connections, the terminal can initiate execution indication information to control data transmission of any one of the 3GPP user plane connections. As described above, when the terminal supports multiple 3GPP user plane connections, it is possible to flexibly control the data transmission of different 3GPP user plane connections.

### BRIEF DESCRIPTION OF THE DRAWINGS

FIG. 1 is a schematic diagram of an application scenario according to an embodiment of the present disclosure.
FIG. 2 is a schematic diagram of a 5G network system architecture.
FIG. 3 is a schematic diagram of a scenario of multiple-access (MA)-PDU.
FIG. 4 is a schematic flowchart of a method for communication according to an embodiment of the present disclosure.
FIG. 5 is a schematic flowchart of a method for communication according to another embodiment of the present disclosure.
FIGS. 6a and 6b are schematic diagrams of two scenarios for establishing user plane connections via two 3GPP accesses according to the present disclosure.
FIGS. 7 to 13 are various schematic flowcharts of a method for communication according to an embodiment of the present disclosure.
FIG. 14 is a schematic block diagram of a terminal according to an embodiment of the present disclosure.
FIG. 15 is a schematic block diagram of a core network element according to an embodiment of the present disclosure.
FIG. 16 is a schematic block diagram of a device for communication according to an embodiment of the present disclosure.
FIG. 17 is a schematic block diagram of a chip according to an embodiment of the present disclosure.
FIG. 18 is a schematic block diagram of a communication system according to an embodiment of the present disclosure.

### DETAILED DESCRIPTION

The technical solutions in the embodiments of the present disclosure will be described below with reference to the drawings in the embodiments of the present disclosure.

The technical solutions of the embodiments of the present disclosure are applicable to various communication systems, such as a Long-Term Evolution (LTE) system, an Advanced Long-Term Evolution (LTE-A) system, a New Radio (NR) system, an evolved system of an NR system, an LTE-based access to Unlicensed spectrum (LTE-U) system, an NR-based access to Unlicensed spectrum (NR-U) system, a Non-Terrestrial Network (NTN) system, a Universal Mobile Telecommunication System (UMTS), a Wireless Local Area Network (WLAN), Wireless Fidelity (WiFi), a 5th-Generation (5G) communication system, or other communication systems.

Generally speaking, conventional communication systems support a limited number of connections and are easy to implement. However, with the development of communication technologies, mobile communication systems will not only support conventional communications, but also support, for example, Device to Device (D2D) communication, Machine to Machine (M2M) communication, Machine Type Communication (MTC), Vehicle to Vehicle (V2V) communication, and Vehicle to Everything (V2X) communication, etc. The embodiments of the present disclosure are also applicable to these communication systems. In a possible implementation, a communication system in an embodiment of the present disclosure is applicable to a Carrier Aggregation (CA) scenario, a Dual Connectivity (DC) scenario, or a Standalone (SA) deployment scenario. In a possible implementation, a communication system in an embodiment of the present disclosure may be applicable to an unlicensed spectrum, where the unlicensed spectrum may also be considered as a shared spectrum. Alternatively, the communication system in the embodiment of the present disclosure may also be applicable to a licensed spectrum, where the licensed spectrum may also be considered as an unshared spectrum.

The embodiments of the present disclosure describe various embodiments in conjunction with a network device and a terminal device, where the terminal device may also be referred to as User Equipment (UE), an access terminal, a user unit, a user station, a mobile station, a mobile site, a remote station, a remote terminal, a mobile device, a user terminal, a terminal, a wireless communication device, a user agent, or a user apparatus, etc. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device having a wireless communication function, a computing device or another processing device connected to a wireless modem, a vehicle-mounted device, a wearable device, a terminal device in a next-generation communication system such as an NR network, or a terminal device in a future evolved Public Land Mobile Network (PLMN) network, etc. In the embodiments of the present disclosure, the terminal device may be deployed on land, including an indoor or outdoor device, a handheld device, a wearable device, or a vehicle-mounted device; it may also be deployed on the surface of water (such as a ship, etc.); it may also be deployed in the air (e.g., on an airplane, a balloon, a satellite, etc.). In the embodiments of the present disclosure, the terminal device may be a mobile phone, a tablet computer (Pad), a computer with a wireless transceiving function, a Virtual Reality (VR) terminal device, an Augmented Reality (AR) terminal device, a wireless terminal device in industrial control, a wireless terminal device in self-driving, a wireless terminal device in remote medical care, a wireless terminal device in a smart grid, a wireless terminal device in transportation safety, a wireless terminal device in a smart city, a wireless terminal device in a smart home, etc. As an example rather than a limitation, in the embodiments of the present disclosure, the terminal device may also be a wearable device. The wearable device may also be referred to as a wearable smart device, and is a general term for wearable devices that are developed by intelligently designing daily wear applying a wearable technology, such as glasses, gloves, watches, clothes, and shoes. The wearable device is a portable device that is directly worn on the body or integrated into clothes or an accessory of a user. The wearable device is not only a hardware device, but also implements powerful functions by means of software support, data interaction, and cloud interaction. In a broad sense, wearable smart devices include those that are fully functional and large in size, and can implement complete or partial functions without dependence on smart phones, such as smart watches or smart glasses, and those that only focus on a certain type of application function and need to be used in cooperation with other devices such as smart phones, such as various smart bracelets, smart jewelry, etc., for monitoring physical signs.

In the embodiments of the present disclosure, the network device may be a device used to communicate with a mobile device, and the network device may be an Access Point (AP) in a WLAN, a Base Transceiver Station (BTS) in GSM or CDMA, a NodeB (NB) in WCDMA, an Evolutional Node B (eNB or eNodeB) in LTE, a relay station or access point, a vehicle-mounted device, a wearable device, a network device (gNB) in an NR network, a network device in a future evolved PLMN network, or a network device in an NTN network, etc. As an example rather than a limitation, in the embodiments of the present disclosure, the network device may have a mobile characteristic. For example, the network device may be a mobile device. Optionally, the network device may be a satellite or a balloon station. For example, the satellite may be a Low-Earth Orbit (LEO) satellite, a Medium-Earth Orbit (MEO) satellite, a Geostationary Earth Orbit (GEO) satellite, a High Elliptical Orbit (HEO) satellite, or the like. Optionally, the network device may also be a base station disposed on land, in water, etc. In the embodiment of the present disclosure, the network device may provide services for a cell, and the terminal device communicates with the network device through a transmission resource (for example, a frequency domain resource, or a frequency spectrum resource) used by the cell. The cell may be a cell corresponding to the network device (for example, a base station), and the cell may belong to a macro base station or a base station corresponding to a Small cell. The Small cell herein may include a Metro cell, a Micro cell, a Pico cell, a Femto cell, and the like. These Small cells have characteristics of small coverage and low transmit power, and are suitable for providing a high-rate data transmission service.

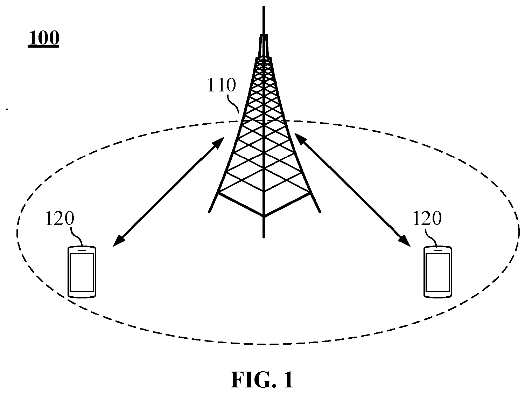

FIG. 1 illustratively shows a communication system 100. The communication system 100 includes a network device 110 and two terminal devices 120. In a possible implementation, the communication system 100 may include a plurality of network devices 110, and the coverage range of each network device 110 may include another number of terminal devices. The embodiments of the present disclosure are not limited thereto. In a possible implementation, the communication system 100 may further include other network entities such as a Mobility Management Entity (MME), an Access and Mobility Management Function (AMF), and the embodiment of the present disclosure is not limited thereto. The network device may further include an access network device and a core network element. That is, the wireless communication system further includes a plurality of core networks for communicating with access network devices. The access network device may be an Evolutional Node B (eNB or eNodeB for short), macro base station, a micro base station (also referred to as a "small base station"), a pico base station, an access point (AP), a transmission point (TP), or a new generation node B (gNodeB) in a long-term evolution (LTE) system, a next radio (NR) system, or an authorized auxiliary access long-term evolution (LAA-LTE) system. It should be understood that a device having a communication function in the network/system in the embodiments of the present disclosure may be referred to as a communication device. Using the communication system shown in FIG. 1 as an example, a communication device may include a network device and a terminal device having a communications function, and the network device and the terminal device may be specific devices in the embodiments of the present disclosure, and details are not described herein again. The communication device may further include another device in the communication system, such as a network controller, a mobility management entity, or another network entity, which is not limited by the embodiments of the present disclosure.

In order to facilitate understanding of the embodiments of the present disclosure, the basic procedures and basic concepts involved in the embodiments of the present disclosure will be briefly described below. It should be understood that the basic procedures and basic concepts described below are not intended to limit the embodiments of the present disclosure.

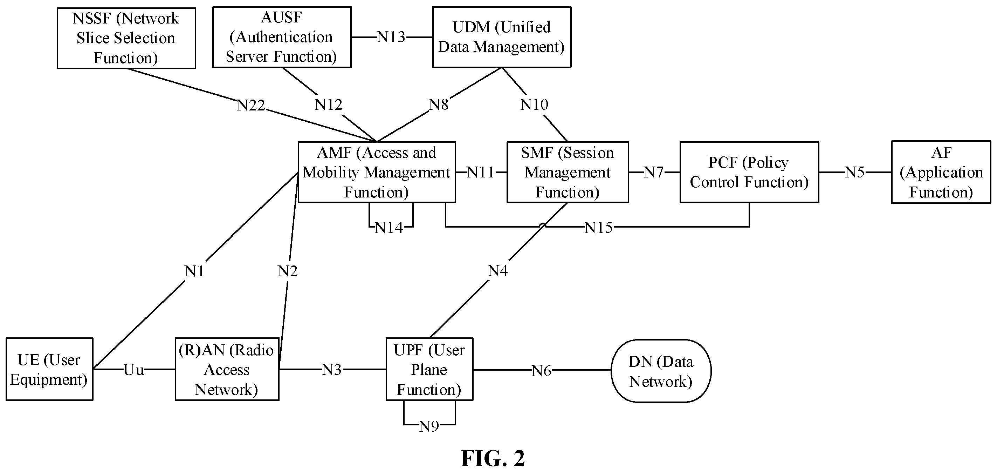

As shown in FIG. 2, the architecture diagram of the 5G Network system includes: Network Slice Selection Function (NSSF), which is mainly used for managing information related to Network slices, such as selecting Network slices for terminal devices; Authentication Server Function (AUSF), which is used to perform the user access identity authentication function; Unified Data Management (UDM), which is used to manage and store subscription data and authentication data; Access and Mobility Management Function (AMF), which is used for mobility management, security anchor, security UE policy management, and the like, in addition to mobility management for the UE, the AMF is also responsible for forwarding session management related messages between the UE and the SMF; Session Management Function (SMF), which is used to perform session management, UE IP address allocation and management, etc; Policy Control Function (PCF), which is responsible for formulating policies related to mobility management, session management, charging, and the like for the UE; Application Function (AF), which is used for an external application server; User Plane Function (UPF), which is used for complex user plane processing, such as forwarding traffic between a radio access network and the Internet, reporting traffic usage, implementing Quality of Service (QoS) policy, etc; Data Network (DN), which is a 5GC external Data Network (such as the Internet, etc.). Data transmission is performed between nodes of the 5G core Network (5GC), between user equipment (UE) and nodes of the 5GC, between UE and Radio Access Network ((R)AN), and between RAN and nodes of the 5GC via corresponding interfaces, respectively. For example, as shown in FIG. 2, data transmission is performed between the AMF and the NSSF in the 5GC via the interface N22; the AMF performs data transmission with the SMF via the interface N11; the AMF performs data transmission with the AUSF via the N12; data transmission is performed between AMF and UDM via interface N8. Data transmission is performed between SMF and UPF via the interface N4. The UPF performs data transmission with the external data network via the interface N6 and performs data transmission with the AN via the interface N3. The UE performs access layer connection with the (R) AN via the Uu port to exchange access layer messages and perform wireless data transmission, and the UE performs non-access layer (NAS) connection with the AMF via the N1 port to exchange NAS messages. Data transmission is performed between RAN and AMF via interface N2, and data transmission is performed between RAN and UPF via interface N3. It should be understood that only some interfaces between nodes have been described above, and other interfaces between other nodes of the 5GC will not be described in detail in FIG. 2. In FIG. 2, except for the UE, the (R) AN, and the DN, all other nodes are core network nodes. The core network nodes can be further divided into user plane nodes (i.e., UPF in FIG. 2) and control plane nodes (e.g., other core network nodes in the core network nodes other than UPF).

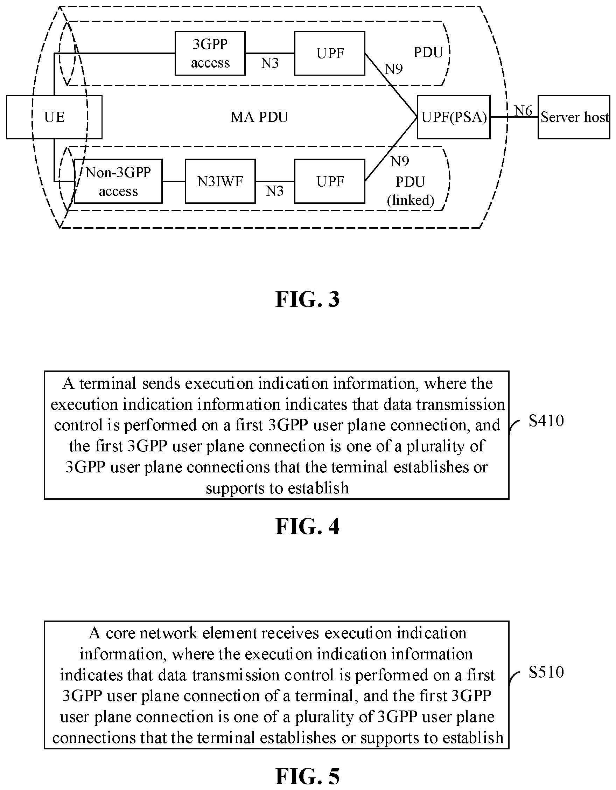

The current 3rd Generation Partnership Project (3GPP) system supports MA-PDU scenarios (or session modes) with a combination of 3GPP access and Non-3GPP access. In the MA-PDU scenario shown in FIG. 3, the UE can simultaneously access the core network via 3GPP access and non-3gpp access, and realize transmission of different data packets via 3GPP access or non-3gpp access. In some practical use cases, there are many types of 3GPP access, including but not limited to NR access, E-UTRA access, satellite access, and the like. Non-3GPP access includes, but is not limited to, Wifi and the like. Specifically, the MA-PDU scenario shown in FIG. 3 includes: the UE connects to the UPF via the interface N3 through 3GPP access, the UPF connects to the UPF (PDU Session Anchor (PSA)) via the interface N9, and finally the UPF (PSA) connects to the Server Host via the interface N6, so that the UE can transport the Protocol Data Unit (PDU) (or transport the PDU session) via a 3GPP connection; the UE connects to the Non-3GPP Inter Working Function (N3IWF) via Non-3GPP access, the N3IWF connects to the UPF via the interface N3, the UPF connects to the UPF (PSA) via the interface N9, and finally the UPF (PSA) connects to the Server Host via the interface N6, so that the UE can transport the PDU (linked) via a non-3GPP connection.

Assuming that the PDU session allows 3GPP Access and non-3gpp Access, the multi-access PDU connection service is realized by establishing a multi-access PDU (MA PDU) session, that is, a PDU session that may have user plane resources on two Access networks. The establishment mode of the MA-PDU session provided or supported by the current 3GPP system can realize that a 3GPP user plane connection and a non-3gpp user plane connection correspond to a MA-PDU session together, so that the data packets of the session can be subjected to steering, switching, or splitting (hereinafter referred to as SSS) according to the policy, which is called ATSSS (Access Traffic Steering, Switching, Splitting) mechanism. The ATSSS mechanism supports the multi-access PDU connection service, which allows the exchange of PDUs between the UE and the data network (e.g., Server Host) by simultaneously using one 3GPP access network and one non-3GPP access network, and two independent N3/N9 tunnels between the PSA and the RAN.

The UE may request an MA PDU session when the UE registers via both 3GPP and non-3GPP access, or when the UE registers via only one type of access. After establishing an MA PDU session, when user plane resources are available on both access networks, the UE applies network-provided policies (i.e., ATSSS rules) and considers local conditions (e.g., network interface availability, signal loss conditions, user preferences, etc.) for deciding how to distribute uplink traffic across the two access networks. Similarly, the UPF anchor of the MA PDU session applies network-provided policies (i.e., N4 rules) and feedback information (e.g., access network unavailable or available) received from the UE via the user plane to determine how to distribute downlink traffic across devices. In two N3/N9 tunnels and two access networks, when user plane resources exist on only one access network, the UE applies ATSSS rules and considers local conditions to trigger the establishment or activation of user plane resources on the other access network.

Here, the type of the MA PDU session does not support the unstructured type, and specifically, the type of the MA PDU session may be one of the following types: IPv4, IPv6, IPv4v6, or Ethernet.

It can be seen that the MAPDU session relies on the anchor of the two accesses on the UPF, which introduces additional complexity on the network side. For two 3GPP access scenarios, even if steering, switching or splitting (SSS) is performed using a method similar to the current MA-PDU session, additional network configuration is still needed, and this configuration is relatively static, and it needs to be constantly negotiated and updated with the application, so it is impossible to flexibly control the data transmission of user plane connections corresponding to different 3GPP accesses.

Further, if the function of SSS is placed in the application layer, the 3GPP system only supports the turning on and turning off of data for each PDU session, and does not need to aggregate data to the same anchor. In such a case, the current mechanism needs to be enhanced as follows: for user plane connections (PDU sessions, PDN connections, etc.) established on different RAT types, it is necessary to support the fast data transmission turning on or turning off capability of the UE, and considering compatibility problems, a negotiation mechanism is needed; for turning on and turning off data transmission, operations of different granularities need to be supported, including UE granularity, user plane connection granularity, QoS flow/bearer granularity, uplink and downlink granularity, etc.

It is to be understood that the terms "system" and "network" are used interchangeably herein. In the present disclosure, the term "and/or" is merely an association relationship that describes associated objects, which indicate that there may be three relationships. For example, "A and/or B" may mean that there are three situations: A exists alone, A and B exist simultaneously, and B exists alone. In addition, the character "/" in the present disclosure generally indicates that there is "or" relationship between objects associated before and after. It should be understood that the reference to "indication" in embodiments of the present disclosure may be a direct indication, may be an indirect indication, and may also be indicative of an association relationship. For example, A indicates B, which may mean that A directly indicates B, for example, B can be acquired by A. It may also mean that A indicates B indirectly, for example, A indicates C, and B can be acquired through C. It may also be indicated that there is an association relationship between A and B. In the description of the embodiments of the present disclosure, the term "correspondence" may indicate that there is a direct correspondence or indirect correspondence relationship between the two, may indicate that there is a correlation relationship between the two, or may indicate a relationship between indicating and being indicated, configuring and being configured, or the like.

FIG. 4 is a schematic flowchart of a method for communication according to an embodiment of the present disclosure. The method includes at least part of the following content.

At S410, a terminal sends execution indication information, where the execution indication information indicates that data transmission control is performed on a first 3GPP user plane connection, and the first 3GPP user plane connection is one of a plurality of 3GPP user plane connections that the terminal establishes or supports to establish.

FIG. 5 is a schematic flowchart of a method for communication according to another embodiment of the present disclosure. The method includes at least part of the following content.

At S510, a core network element receives execution indication information, where the execution indication information indicates that data transmission control is performed on a first 3GPP user plane connection of a terminal, and the first 3GPP user plane connection is one of a plurality of 3GPP user plane connections that the terminal establishes or supports to establish.

Here, the core network element may include a control plane network element and/or a user plane network element. Exemplarily, the control plane network element may include at least one of: one or more AMFs, or one or more SMFs. The user plane network element may include a UPF. It should be understood that the foregoing is merely an exemplary illustration and that all possible control plane network elements and/or user plane network elements of the core network elements are not exhaustively listed herein.

The terminal may be a 3GPP terminal, that is, a terminal capable of accessing a 3GPP network to send and receive data. Exemplarily, the terminal may be a mobile phone, a watch, a tablet, or the like. This embodiment does not exhaustively enumerate and limit various possible types of terminals.

The first 3GPP user plane connection may be a 3GPP user plane connection currently established by the terminal. Further, the first 3GPP user plane connection is a 3GPP user plane connection established before the terminal sends the execution indication information. Exemplarily, the terminal currently (or before sending the execution indication information) has established and simultaneously maintained a plurality of 3GPP user plane connections, and the plurality of 3GPP user plane connections include the first 3GPP user plane connection. Alternatively, the first 3GPP user plane connection is the only 3GPP user plane connection established by the terminal, and the terminal supports the establishment of a plurality of 3GPP user plane connections, or the terminal has the capability to establish a plurality of 3GPP user plane connections.

Here, the plurality of 3GPP user plane connections may correspond to the same PDU session or the same PDN connection. Alternatively, different 3GPP user plane connections among the plurality of 3GPP user plane connections may correspond to different PDU sessions or different PDN connections.

Different 3GPP user plane connections among the plurality of 3GPP user plane connections correspond to at least one difference of: a Radio Access Technology (RAT), a system type, a network type, or a network number.

Specifically, the terminal supports establishing a plurality of 3GPP user plane connections using at least one of: one or more RATs, one or more network types, one or more system types, or one or more network numbers. Further, at least one of the RAT, the network type, or the system type used by different 3GPP user plane connections among a plurality of 3GPP user plane connections that the terminal supports to establish is different.

The one or more RATs may include at least one of: Evolved Universal Terrestrial Radio Access (E-UTRA), NR terrestrial access, NR Satellite access, or the like. For example, the terminal supports establishing a plurality of 3GPP user plane connections using at least one of E-UTRA, NR, or satellite. For example, the terminal supports establishing one 3GPP user plane connection using the NR, establishing another 3GPP user plane connection using the satellite, and the like.

The one or more network types include at least one of a Terrestrial Network (TN) or a Non Terrestrial Network (NTN). For example, the terminal supports establishing a plurality of 3GPP user plane connections using at least one of TN or NTN. For example, the terminal supports establishing a 3GPP user plane connection using TN, establishing another 3GPP user plane connection using NTN, and the like.

The one or more network types include at least one of a Public Land Mobile Network (PLMN) or a Non-public Network (NPN). For example, the terminal supports establishing a plurality of 3GPP user plane connections using at least one of PLMN or NPN. For example, the terminal supports establishing a 3GPP user plane connection using PLMN, establishing another 3GPP user plane connection using NPN, and the like.

The one or more system types include at least one of: fifth Generation Wireless Communication System (5GS), or Evolved Packet System (EPS). For example, the terminal supports establishing a plurality of 3GPP user plane connections using at least one of 5GS or EPS. For example, the terminal supports establishing one 3GPP user plane connection (for example, it can be a PDU session) using 5GS, establishing another 3GPP user plane connection (for example, it can be a Public Data Network (PDN) connection) using EPS, and so on.

The network number may also alternatively be referred to as a network identification or network ID. The one or more network numbers may include at least one of: an ID of each of the one or more PLMNs, or an ID of each of the one or more SNPNs.

It should be understood that the above-described one or more RATs, one or more network types, one or more system types may also be used in combination. For example, the terminal supports establishing a plurality of 3GPP user plane connections using PLMN and NPN under TN, and the like, which is not limited or exhaustive here.

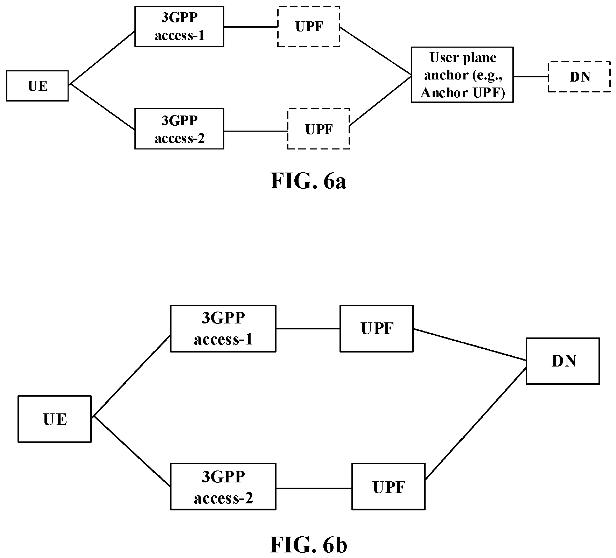

A scenario in which a UE establishes multiple 3GPP user plane connections is illustrated in conjunction with FIGS. 6a and 6b. The difference between FIGS. 6a and 6b is that the two 3GPP user plane connections of FIG. 6a will be anchored to the same user plane anchor (such as an Anchor UPF), while the two 3GPP user plane connections in FIG. 6b do not need to be anchored to the same UPF. Specifically, the MA PDU scenario shown in FIG. 6a includes: the UE is connected to 3GPP access-1, the 3GPP access-1 is connected to a UPF via an interface N3, the UPF is connected to a user plane anchor via an interface N9, and finally the user plane anchor is connected to DN via an interface N6, so that the UE can transport PDU (or a PDU session) via a 3GPP user plane connection; the UE is also connected to 3GPP Access-2, which is connected to another UPF via the interface N3, the UPF is connected to the user plane anchor via the interface N9, and finally the user plane anchor is connected to the DN via the interface N6, so that the UE can transport PDU (linked) via the second 3GPP user plane connection. The MA PDU scenario shown in FIG. 6b includes: the UE connects to 3GPP Access-1, the 3GPP Access-1 connects to the UPF via the interface N3, the UPF connects to the DN, i.e., the UE establishes a 3GPP user plane connection; the UE may also connect to 3GPP Access-2, which connects another UPF via the interface N3, and the UPF is connected to the DN, so that the UE can transport the PDU via a second 3GPP user plane connection. The scheme provided by the embodiment of the present disclosure can be applied to any scenario provided in FIG. 6a or FIG. 6b above, that is, the scheme provided by the embodiment does not limit whether multiple 3GPP user plane connections are anchored to the same UPF.

The data transmission control includes one of: turning on data transmission, turning off data transmission, or switching data transmission. That is, the execution indication information indicates that the terminal requests or requires one of: performing a process of turning on data transmission for the first 3GPP user plane connection, performing a process of turning off data transmission for the first 3GPP user plane connection, or performing a process of data switching for the first 3GPP user plane connection. Here, the process of performing data switching on the first 3GPP user plane connection may refer to one of: switching data transported by the first 3GPP user plane connection to another 3GPP user plane connection, or switching data of another 3GPP user plane connection to the first 3GPP user plane connection.

In some possible implementations, the terminal side may locally generate and store one or more execution parameters and/or one or more execution identifications.

The one or more execution parameters and/or the one or more execution identifications generated locally by the terminal may include at least one of: an execution parameter indicating turning on data transmission; an execution parameter indicating turning off data transmission; an execution parameter indicating data switching; an execution identification indicating turning on data transmission; an execution identification indicating turning off data transmission; an execution identification indicating data switching; an execution parameter indicating one or more granularities of data transmission control; or an execution identification indicating one or more granularities of data transmission control.

Here, the one or more granularities include at least one of: a session, a 3GPP user plane connection, a data flow, a bearer, an uplink, or a downlink.

Here, the one or more execution parameters and/or the one or more execution identifications generated locally by the terminal refer to execution parameters and/or execution identifications corresponding to all actions supported, requested or required or capable of being executed locally by the terminal, and/or execution parameters and/or execution identifications corresponding to granularity of all actions supported, requested or required or capable of being executed locally by the terminal.

One or more execution parameters and/or one or more execution identifications locally generated at the terminal side. When the terminal needs to send the execution indication information, the terminal may select one or more execution parameters or one or more execution identifications from the one or more execution parameters and/or one or more execution identifications generated and stored locally and add them to the execution indication information, so as to indicate the specific action and/or the target granularity of the specific action that the terminal requests or requires to be executed on the first 3GPP user plane connection through the execution indication information.

Exemplarily, execution parameters generated and stored locally by the terminal may also be referred to as execution candidate parameters, or available execution parameters, or candidate execution parameters, or the like. Exemplarily, the execution identifications generated and stored locally by the terminal may also be referred to as execution candidate identifications, or available execution identifications, or candidate execution identifications, or the like. In the following, in order to distinguish the execution parameters or execution identifications carried in the execution indication information from the terminal and the execution parameters and/or execution identifications locally generated and stored by the terminal, in some examples related to the execution of locally generating and storing the execution parameters and/or execution identifications by the terminal, they are alternatively expressed as the candidate execution parameters and/or the candidate execution identifications. However, it should be understood that this alternative expression is only used to distinguish the execution parameters and the execution identifications in different stages or different processes, and is not used to define possible names of the execution parameters and the execution identifications.

Alternatively, each candidate execution parameter may be represented by description information.

For example, the candidate execution parameter for indicating turning on data transmission may be represented by one of any description information such as "open", "switch on", "turn on", "enable", "activate", "enactivate", and the like.

The candidate execution parameter for indicating turning off data transmission may be represented by one of any description information such as "pending", "stop", "close", "disable", "disactivate", and the like.

The candidate execution parameter for indicating data switching may be represented by "switch". It should be pointed out that the switching direction or the switching mode corresponding to the candidate execution parameter for indicating data switching may be defaulted by both the terminal and the core network element side, or may be specified by the protocol.

The candidate execution parameter corresponding to each of the one or more granularities for indicating data transmission control may be represented by at least one description information such as "flow", "data flow", "QoS Flow", "session", "connection", "Up", "Down", and the like.

Alternatively, each candidate execution identification may be represented by various identification values or various values.

The candidate execution identification for indicating turning on data transmission may be a first value; the candidate execution identification for indicating turning off data transmission may be a second value; the candidate execution identification for indicating data switching may be a third value. The first value, the second value, and the third value are different from each other. For example, the first value may be 001, the second value may be 002, the third value may be 003, or the first value may be 00, the second value may be 01, the third value may be 10, or the like. All possible values of the first value, the second value, and the third value are not limited or exhaustive here, and as long as the first value, the second value, and the third value are different from each other, they are within the scope of protection of the present disclosure. It should be pointed out that the switching direction or the switching mode corresponding to the candidate execution identification for indicating data switching may be defaulted by both the terminal and the core network element side, or may be specified by the protocol.

The candidate execution identification for indicating one or more granularities of the data transmission control may include: candidate execution identifications corresponding to each of the one or more granularities of data transmission control, and different granularities may have different candidate execution identifications.

Specifically, the candidate execution identification for indicating the data transmission control to be session granularity is a third value, the candidate execution identification for indicating the data transmission control to be user plane connection granularity is a fourth value, the candidate execution identification for indicating the data transmission control to be data flow granularity is a fifth value, the candidate execution identification for indicating the data transmission control to be uplink granularity is a sixth value, and the candidate execution identification for indicating the data transmission control to be downlink granularity is a seventh value. Here, the third value to the seventh value are different values, and for example, the third value to the seventh value may be values such as 003, 004, 005, 006, and 007, respectively. It should be understood that this is only an exemplary description, and in actual processing, as long as the specific values of the execution identifications corresponding to different granularities are different, it is within the scope of protection of the present disclosure, and is not exhaustive or limited here.

It should be understood that the one or more execution parameters and/or the one or more execution identifications generated locally on the terminal side may also be synchronized with the core network element in a certain manner. For example, the one or more execution parameters and/or the one or more execution identifications may be configured to the core network element in a pre-configured manner, or the like, so that both the terminal and the core network element may have the same definition for each execution parameter and/or each execution identification. This embodiment does not limit the manner in which the one or more execution parameters and/or the one or more execution identifications are synchronized between the terminal and the core network element.

In some possible implementations, the terminal may first negotiate with the core network before sending the execution indication information.

In some embodiments, before the terminal sends the execution indication information, the following operation is further included: sending, by the terminal, a second request message, where the second request message carries at least one of: execution capability information, a first identification, an association identification, or an identification of the first 3GPP user plane connection. Correspondingly, before the core network element receives the execution indication information, the following operation is further included: receiving, by the core network element, a second request message, where the second request message carries at least one of: execution capability information, a first identification, an association identification, or an identification of the first 3GPP user plane connection.

The second request message may be one of: a session establishment request message, a session modification request message, a connection establishment request message, a connection modification request message, a registration request message, an attach request message, or a Tracking Area Update (TAU) request message. The session establishment (or modification) request message may specifically be a PDU session establishment (or modification) request message. The connection establishment (or modification) request message may specifically be a PDN connection establishment (or modification) request message.

The second request message may be sent via a first access network device, or may be sent via a first 3GPP control plane connection, where the first access network device corresponds to a first 3GPP user plane connection, the first 3GPP control plane connection corresponds to the first access network device, or the first 3GPP control plane connection is established via the first access network device.

It should be understood that the specific type of the second request message above is merely an example, and the second request message may be of another type in actual processing, and an exhaustive list is not made here. It should also be pointed out that when the second request message is any of the above types, the second request message may also carry parameters and/or contents specified in the relevant protocol. For example, when the second request message is a session establishment request message, in addition to carrying at least one of execution capability information, a first identification, an association identification, or an identification of the first 3GPP user plane connection, it may also carry content and/or parameters that a session establishment request message is required to carry according to relevant protocols. This embodiment does not impose limitations or exhaustive enumeration in this regard.

The execution capability information indicates that the terminal supports data transmission control under one or more granularities, where the one or more granularities include at least one of: a session, a 3GPP user plane connection, a data flow, a bearer, an uplink, or a downlink. Here, the execution capability information may alternatively be referred to as execution request information.

Optionally, the one or more granularities may include a session, which may refer to a PDU session. The execution capability information may indicate that the terminal supports data transmission control at the session granularity (e.g., an entire PDU session).

Optionally, the one or more granularities may include a 3GPP user plane connection. The execution capability information may indicate that the terminal supports execution of data transmission control with the granularity of the 3GPP user plane connection.

In one case, the execution capability information may indicate that the terminal supports separately performing data transmission control for each of the plurality of 3GPP user plane connections.

In one case, the second request message may carry the identification of the first 3GPP user plane connection. Accordingly, the execution capability information may indicate that the terminal supports performing data transmission control on the first 3GPP user plane connection.

In yet another case, the execution capability information may further include at least one of: one or more RATs, one or more system types, or one or more network types, to indicate that the terminal supports performing data transmission control on a user plane connection corresponding to at least one of: the one or more RATs, the one or more system types, or the one or more network types, respectively. For example, the execution capability information may include the E-UTRA and the NR, and the execution capability information may indicate that the terminal supports performing data transmission control on the user plane connections corresponding to the E-UTRA and the NR, respectively. For example, the execution capability information may include EPS and 5GS, that is, the execution capability information may indicate that the terminal supports performing data transmission control on user plane connections corresponding to EPS and 5GS, respectively.

Optionally, the one or more granularities may include data flows and/or bearers. The data flow may refer to a QoS Flow.

In one case, the execution capability information may indicate that the terminal supports performing data transmission control at the data flow granularity; and/or, the execution capability information may indicate that the terminal supports performing data transmission control at the bearer granularity. Exemplarily, the execution capability information may indicate that the terminal supports performing data transmission control at the data flow granularity for each of the plurality of 3GPP user plane connections; and/or the execution capability information may indicate that the terminal supports performing data transmission control at the bearer granularity for each of the plurality of 3GPP user plane connections.

In one case, the data flow or bearer granularity may be used in conjunction with other granularities.

Exemplarily, one or more granularities include 3GPP user plane connections and data flows, or one or more granularities include 3GPP user plane connections and bearers. The second request message may carry an identification of the first 3GPP user plane connection, and the execution capability information may indicate that the terminal supports performing data transmission control on the first 3GPP user plane connection at the data flow granularity, or the execution capability information may indicate that the terminal supports performing data transmission control on the first 3GPP user plane connection at the bearer granularity.

The execution capability information may also include information related to one or more data flows, or information related to one or more bearers. For example, if the first 3GPP user plane connection has been established before sending the second request message, and the terminal has obtained information related to all data flows or all bearers corresponding to the first 3GPP user plane connection, then the terminal may indicate, in the execution indication information, which data flow(s) or which bearer(s) it supports or requests to perform data transmission control on.

The information related to one or more data flows includes information related to each of the one or more data flows. The information related to each data flow may include at least one of: an identification (such as an ID) of the data flow, Filter information corresponding to the data flow, or the like.

The information related to one or more bearers includes information related to each of the one or more bearers. The information related to each bearer may include at least one of: an identification of the bearer, Filter information corresponding to the bearer, or the like.

Optionally, the one or more granularities may include an uplink and/or a downlink.

In one case, the execution capability information may indicate that the terminal supports performing data transmission control on uplink data and/or downlink data. Here, the uplink data may refer to data transported by all uplink data flows in all 3GPP user plane connections (or the entire PDU session) of the terminal, or data transported by all uplink bearers in all 3GPP user plane connections (or the entire PDU session) of the terminal. The downlink data may refer to data transported by all downlink data flows in all 3GPP user plane connections of the terminal or data transported by all downlink bearers in all 3GPP user plane connections of the terminal.

In one case, the uplink and/or downlink granularity may also be used in conjunction with other granularities.

Exemplarily, an uplink and/or downlink granularity is combined with at least one of the data flow, or the bearer granularity. The execution capability information may indicate that the terminal supports performing data transmission control at the data flow and the uplink and/or downlink granularity, and/or the execution capability information may indicate that the terminal supports performing data transmission control at the bearer and the uplink and/or downlink granularity.

Exemplary, the uplink and/or downlink granularity is combined with the 3GPP user plane connection granularity. The execution capability information may indicate that the terminal supports performing data transmission control on the uplink data flow and/or the downlink data flow of the first 3GPP user plane connection, and/or the execution capability information may indicate that the terminal supports performing data transmission control on the uplink bearer and/or the downlink bearer of the first 3GPP user plane connection.

Exemplary, the uplink and/or downlink granularity is combined with the 3GPP user plane connection granularity and the data flow granularity. The second request message may carry the identification of the first 3GPP user plane connection, and the execution capability information may further include information related to one or more data flows. Accordingly, the execution capability information may indicate that the terminal supports performing data transmission control on the uplink and/or downlink of one or more data flows of the first 3GPP user plane connection.

Exemplary, the uplink and/or downlink granularity is combined with the 3GPP user plane connection granularity and the bearer granularity. The second request message may carry the identification of the first 3GPP user plane connection, and the execution capability information may further include information related to one or more bearers. Accordingly, the execution capability information may indicate that the terminal supports performing data transmission control on the uplink and/or downlink of one or more bearers of the first 3GPP user plane connection.

It should be understood that the foregoing is merely an exemplary description of the execution capability information, and does not exhaust or limit the combination of the execution capability information at all possible granularities.

The first identification indicates at least one of: the terminal supports or requests establishment of a plurality of 3GPP user plane connections, the terminal supports or requests diversion of data between the plurality of 3GPP user plane connections, the terminal supports or requests migration of data between the plurality of 3GPP user plane connections, or the terminal supports or requests splitting of data between the plurality of 3GPP user plane connections.

Here, the terminal supports or requests to establish a plurality of 3GPP user plane connections may mean that the terminal has the capability to establish a plurality of 3GPP user plane connections, and/or the terminal requests to establish a plurality of 3GPP user plane connections.

The terminal supports or requests diversion of data between the plurality of 3GPP user plane connections may mean that the terminal supports or requests to select the plurality of 3GPP user plane connections for a new data flow and transports traffic of the data flow via the selected 3GPP user plane connections.

The terminal supports or requests migration of data between the plurality of 3GPP user plane connections may mean that the terminal supports or requests to move all traffic of the ongoing data flow from the 3GPP user plane connection corresponding to one access network to the 3GPP user plane connection corresponding to another access network.

The terminal supports or requests splitting of data between the plurality of 3GPP user plane connections may mean that the terminal supports or requests to split data flow traffic among the plurality of 3GPP user plane connections. For example, some services of a data flow are transported over one 3GPP user plane connection, while other services of the same data flow are transported over another 3GPP user plane connection.

The association identification is a same identification associated with a plurality of 3GPP user plane connections that the terminal supports or requests to establish. Specifically, the association identification may refer to the same identification corresponding to the plurality of 3GPP user plane connections of the terminal that support SSS.

The identification of the first 3GPP user plane connection and the association identification may be combined into one parameter, such as a second identification. The second identification may include an association domain value and a coding domain value, the function of the association domain value may be the same as the function of the association identification, and the function of the coding domain value may be the same as the function of the identification of the first 3GPP user plane connection, which will not be described in detail here.

In some embodiments, before the terminal sends the execution indication information, the following operation is further included: receiving, by the terminal, a second response message, where the second response message carries execution-related parameters of an action allowing or requesting or requiring the terminal to perform. Correspondingly, before the core network element receives the execution indication information, the following operation is further included: sending, by the core network element, a second response message, where the second response message carries execution-related parameters of an action allowing or requesting or requiring the terminal to perform.

Optionally, the timing for the core network element to send the second response message may be after the core network element receives the second request message and before the core network element receives the execution indication information. Correspondingly, the timing for the terminal to receive the second response message may be after the terminal sends the second request message and before the terminal sends the execution indication information.

Specifically, the core network element sending the second response message may include: the core network element receives the second request message; generates the second response message based on at least one of the execution capability information, the first identification, the association identification, or the identification of the first 3GPP user plane connection carried in the second request message; and sends the second response message. The embodiment is not limited to the specific way in which the core network element generates the second response message.

Further, the transmission mode and message type of the second response message and the second request message may correspond to each other. For example, the second request message is a registration request message from the terminal to the core network element via the first access network device, and the second response message may be a registration response message from the core network element to the terminal via the first access network device. For another example, the second request message may be a connection establishment or modification request message from the terminal to the core network element via the first 3GPP control plane connection, and the second response message may be a connection establishment or modification response message from the core network element to the terminal via the first 3GPP control plane connection. Various possible types and transmission modes of the second request message are the same as those of the previous embodiment, and thus will not be described repeatedly.

Optionally, the timing for the core network element to send the second response message may be before receiving the execution indication information. Accordingly, the timing for the terminal receives the second response message may be before sending the execution indication information. That is, the core network element may actively or automatically trigger the generation of execution-related parameters without receiving any one or at least one of the execution capability information, the first identification, the association identification, and the identification of the first 3GPP user plane connection from the terminal, and carry the execution-related parameters in a second response message and send them to the terminal.

It should be pointed out that the core network element does not receive any one or at least one of the execution capability information, the first identification, the association identification, and the identification of the first 3GPP user plane connection from the terminal, which does not mean that the core network element does not receive any message from the terminal. For example, the core network element may still send a second response message after receiving the request message from the terminal via the first 3GPP control plane connection or the first access network device, except that the request message transported via the first 3GPP control plane connection or the first access network device only carries the content specified in the relevant protocol and does not carry any one or at least one of the following: execution capability information, the first identification, the association identification, or the identification of the first 3GPP user plane connection. The type of the request message transported by the first 3GPP control plane connection or the first access network device is similar to the aforementioned second request message, and will not be described in detail.

It should be noted that the action allowed or requested or required to be performed by the terminal may include a plurality of actions or a plurality of types of actions. The plurality of types of actions allowed, requested or required to be performed by the terminal may refer to related actions of the plurality of data transmission controls allowed, requested or required to be executed by the terminal. Further, there is a correspondence between each action allowed, requested or required to be executed by the terminal and execution-related parameters. For example, if one action allowed, requested or required to be executed by the terminal is to turn on data transmission, the action of turning on data transmission has corresponding execution-related parameters. For another example, if one action allowed, requested or required to be executed by the terminal is to turn off data transmission, the action of turning off data transmission has corresponding execution-related parameters. For another example, if one action allowed, requested or required to be executed by the terminal is to switch data, the action of switching data transmission has corresponding execution-related parameters.

Here, the one or more execution parameters and/or the one or more execution identifications included in the execution-related parameters refer to execution parameters and/or execution identifications corresponding to all actions that the core network element allows, requests, or requires the terminal to perform, and/or execution parameters and/or execution identifications corresponding to granularity of all behaviors that the core network element allows, requests, or requires the terminal to perform.

Specifically, the execution-related parameters include at least one of: an execution parameter indicating turning on data transmission; an execution parameter indicating turning off data transmission; an execution parameter indicating data switching; an execution identification indicating turning on data transmission; an execution identification indicating turning off data transmission; an execution identification indicating data switching; an execution parameter indicating one or more granularities of data transmission control; or an execution identification indicating one or more granularities of data transmission control. Here, the description of one or more granularities is the same as that of the above-described embodiments, and the description thereof will not be repeated.

The processing of the terminal after receiving the execution-related parameters may include: the terminal locally saving one or more execution parameters and/or one or more execution identifications included in the execution-related parameters. In this way, the terminal and the core network side (such as the core network element) collectively store one or more execution parameters and/or one or more execution identifications having the same meaning or the same definition. When the terminal needs to send the execution indication information, the terminal may select one or more execution parameters or one or more execution identifications from the one or more execution parameters and/or one or more execution identifications included in the locally stored execution-related parameters and add them to the execution indication information, so as to indicate the specific action and/or the target granularity of the specific action that the terminal requests or requires to be executed on the first 3GPP user plane connection through the execution indication information.

Exemplarily, the execution parameters included in the execution-related parameters may also be referred to as execution candidate parameters, or available execution parameters, or candidate execution parameters, or the like. Exemplarily, the execution identifications included in the execution-related parameters may also be referred to as execution candidate identifications, or available execution identifications, or candidate execution identifications, or the like. In the following, in order to distinguish the execution parameters or execution identifications carried in the execution indication information from the terminal and the execution parameters and/or execution identifications included in the execution-related parameters, in some examples related to the execution parameters and/or execution identifications included in the execution-related parameters, they are alternatively expressed as the candidate execution parameters and/or the candidate execution identifications. However, it should be understood that this alternative expression is only used to distinguish the execution parameters and the execution identifications in different stages or different processes, and is not used to define possible names of the execution parameters and the execution identifications. The related description and representation of each candidate execution parameter and each candidate execution identification are the same as those of the previous embodiment, and thus the description thereof will not be repeated.

Optionally, the execution-related parameters further include at least one of: information related to one or more data flows, information related to one or more bearers. Specifically, in a case where an execution identification and/or an execution parameter for indicating one or more granularities of data transmission control is included in the execution-related parameters, and the data flow and/or the bearer is included in the one or more granularities, the execution-related parameters further include at least one of: information related to the one or more data flows, or information related to the one or more bearers.

Here, the one or more data flows included in the execution-related parameters may refer to one or more data flows corresponding to the first 3GPP user plane connection that the network side allows/requests/requires the terminal to perform data transmission control on. The one or more bearers included in the execution-related parameters may refer to one or more bearers corresponding to the first 3GPP user plane connection that the network side allows/requests/requires the terminal to perform data transmission control on. Alternatively, the one or more data flows included in the execution-related parameters may refer to one or more data flows corresponding to each of the plurality of 3GPP user plane connections that the network side allows/requests/requires the terminal to perform data transmission control on. The one or more bearers included in the execution-related parameters may refer to one or more bearers corresponding to each 3GPP user plane connection that the network side allows/requests/requires the terminal to perform data transmission control on.

That is, if the core network element uses execution-related parameters to indicate that the network side allows/requests/requires the terminal to perform data transmission control at the granularity of data flows and/or bearers, the core network element may further use the execution-related parameters to indicate information related to each data flow and/or each bearer that the network side allows/requests/requires the terminal to perform data transmission control on. The description of the information related to each data flow and the information related to each bearer is the same as that of the previous embodiment, and will not be described in detail.

In some embodiments, the terminal and the core network side may complete the negotiation through a certain interaction, and the negotiation process can be implemented by the terminal and the core network element exchanging a second request message and/or a second response message once, as described in the previous embodiments, and will not be repeated here. For example, the terminal may complete negotiation with the core network side and obtain execution-related parameters during or before establishing a certain 3GPP user plane connection.

In some embodiments, the terminal may negotiate with the network side, such as a core network element, both during the process of establishing each 3GPP user plane connection or before establishing each 3GPP user plane connection. In the embodiment, the terminal sends a plurality of second request messages to the core network element, and/or the terminal receives a plurality of second response messages from the core network element.

Different second request messages of the plurality of second request messages may be sent via different access network devices. For example, the terminal sends one second request message via the first access network device and another second request message via the second access network device, respectively. The second access network device differs from the first access network device in at least one of the RAT, the system type, or the network type. It should be understood that the content types that may be carried by different second request messages may all include at least one of execution capability information, a first identification, an association identification, or an identification of a 3GPP user plane connection, but the specific contents carried by different second request messages may be different. For example, different second request messages may carry different identifications of 3GPP user plane connections.

Different second response messages among the plurality of second response messages are also sent via different access network devices, which will not be described in detail here. It should be understood that different second response messages may all carry execution-related parameters, but the specific contents of the execution-related parameters carried by different second response messages may be different. For example, the information related to the data flow and/or the information related to the bearer carried by different second response messages may be different.

For example, the terminal may first send a second request message (which may be a PDU session establishment request message) to a 5GS core network element via a first 3GPP control plane connection (or referred to as a first NAS connection) of the 5GS. The second request message may carry at least one of execution capability information, a first identification, an association identification, or an identification of the first 3GPP user plane connection. After receiving the second request message, the 5GS core network element sends a second response message (carrying execution-related parameters) to the terminal via the first 3GPP control plane connection. Then the terminal may send another second request message to the EPS core network element via the second 3GPP control plane connection of the EPS (or referred to as the second NAS connection), which may carry at least one of execution capability information, a first identification, an association identification, or an identification of the second 3GPP user plane connection. After receiving the second request message, the EPS core network element sends a second response message (which may carry execution-related parameters) to the terminal via the second 3GPP control plane connection.

In some possible implementations, when the terminal needs to perform data transmission control on the first 3GPP user plane connection, it may send an execution indication information for indicating execution of data transmission control on the first 3GPP user plane connection.

The execution indication information includes one of: an execution parameter indicating a data turning on transmission related to the first 3GPP user plane connection; an execution parameter indicating a data turning off transmission related to the first 3GPP user plane connection; an execution parameter indicating data switching related to the first 3GPP user plane connection; an execution identification indicating the data turning on transmission related to the first 3GPP user plane connection; an execution identification indicating the data turning off transmission related to the first 3GPP user plane connection; or an execution identification indicating the data switching related to the first 3GPP user plane connection.

Alternatively, an execution parameter indicating a data turning on transmission related to the first 3GPP user plane connection may be described as an execution parameter corresponding to the first 3GPP user plane connection and used to indicate turning on data transmission. An execution parameter indicating a data turning off transmission related to the first 3GPP user plane connection may be described as an execution parameter corresponding to the first 3GPP user plane connection and used to indicate turning off data transmission. An execution parameter indicating data switching related to the first 3GPP user plane connection may be described as an execution parameter corresponding to the first 3GPP user plane connection and used to indicate data switching. An execution identification indicating a data turning on transmission related to the first 3GPP user plane connection may be described as an execution identification corresponding to the first 3GPP user plane connection and used to indicate turning on data transmission. An execution identification indicating a data turning off transmission related to the first 3GPP user plane connection may be described as an execution identification corresponding to the first 3GPP user plane connection and used to indicate turning off data transmission. An execution identification indicating data switching related to the first 3GPP user plane connection may be described as an execution identification corresponding to the first 3GPP user plane connection and used to indicate data switching.

It should be pointed out that the execution parameter or execution identification indicating data switching related to the first 3GPP user plane connection may be specifically used to indicate, request, or require switching data transmission over the first 3GPP user plane connection to another 3GPP user plane connection; or to request or require switching data transmission over another 3GPP user plane connection to the first 3GPP user plane connection. The switching direction or the switching mode specifically indicated by the execution identification or the execution parameter for indicating the data switching corresponding to the first 3GPP user plane connection may be defaulted by both the terminal and the core network element side, or may be prescribed by the protocol, or may be indicated by the terminal.

It should also be pointed out that the execution parameter or execution identification indicating data switching related to the first 3GPP user plane connection is particularly suitable for a scenario in which a plurality of 3GPP user plane connections that perform switching with each other have the same anchor. For example, when a plurality of 3GPP user plane connections of a terminal all correspond to the same UPF anchor, data switching processing at various target granularities can be performed in these 3GPP user plane connections.

The process of generating the execution indication information by the terminal may be that the terminal selects one or more execution parameters or one or more execution identifications from one or more execution parameters and/or one or more execution identifications stored locally to carry or add them to the execution indication information based on data transmission control that needs to be performed on the first 3GPP user plane connection.

Where the one or more execution parameters and/or one or more execution identifications stored locally may be configured to the terminal by the core network element in the aforementioned embodiment through execution-related parameters. Alternatively, the locally generated one or more execution parameters and/or one or more execution identifications may refer to one or more execution parameters and/or one or more execution identifications locally generated by the terminal in the foregoing embodiment. Hereinafter, in order to distinguish the execution parameters and/or execution identifications used in different stages, each execution parameter of all execution parameters stored locally in the terminal is referred to as a candidate execution parameter, and each execution identification of all execution identifications stored locally in the terminal is referred to as a candidate execution identification. However, it should be understood that such alternative expressions are only used to distinguish execution parameters and execution identifications in different stages or different processes, and are not used to define different contents of execution parameters and execution identifications.

Optionally, the terminal may further indicate, in the execution indication information, a target granularity of a specific content or a specific action to be performed for data transmission control on the first 3GPP user plane connection.

Specifically, the execution indication information further includes one of: an execution parameter indicating a target granularity of data transmission control related to the first 3GPP user plane connection, or an execution identification indicating the target granularity of the data transmission control related to the first 3GPP user plane connection. Where the target granularity includes at least one of: a session, a 3GPP user plane connection, a bearer, a data flow, an uplink, or a downlink.

Alternatively, an execution parameter indicating the target granularity of the data transmission control related to the first 3GPP user plane connection may be described as an execution parameter corresponding to the first 3GPP user plane connection and used to indicate the target granularity of the data transmission control. An execution identification indicating the target granularity of the data transmission control related to the first 3GPP user plane connection may be described as an execution identification corresponding to the first 3GPP user plane connection and used to indicate the target granularity of the data transmission control.

For example, assuming that the terminal needs to turn off the data transmission of the first 3GPP user plane connection this time, the terminal may select, from all the candidate execution identifications, a candidate execution identification for indicating turning off the data transmission and a candidate execution identification for indicating that the target granularity of the data transmission control is the 3GPP user plane connection, respectively serving as the execution identification for indicating the data turning off transmission related to the first 3GPP user plane connection and the execution identification for indicating that the target granularity of the data transmission control related to the first 3GPP user plane connection is the 3GPP user plane connection, and add an execution parameter for indicating that the data turning off transmission related to the first 3GPP user plane connection and the execution identification for indicating that the target granularity of the data transmission control related to the first 3GPP user plane connection is the user plane connection to the execution indication information, so that the execution indication information indicates that the terminal requests or requires to turn off the data transmission of the first 3GPP user plane connection.

Here, the execution indication information may further include an identification of the first 3GPP user plane connection to indicate that the user plane connection targeted by the terminal this time is specifically the first 3GPP user plane connection. It should be understood that this is only an exemplary description, and in actual processing, since the execution indication information may be sent via the first access network device corresponding to the first 3GPP user plane connection, the execution indication information may not need to carry the identification of the first 3GPP user plane connection, which is not limited in this embodiment.

For example, assuming that the terminal needs to turn on the uplink data transmission of the first 3GPP user plane connection this time, the terminal may select, from all the candidate execution identifications, a candidate execution identification for indicating turning on the data transmission and a candidate execution identification for indicating the uplink granularity, respectively serving as the execution identification for indicating the data turning on transmission related to the first 3GPP user plane connection and the execution identification for indicating that the target granularity of the data transmission control related to the first 3GPP user plane connection is the uplink granularity, and add an execution identification for indicating that the data turning on transmission related to the first 3GPP user plane connection and the execution identification for indicating that the target granularity of the data transmission control related to the first 3GPP user plane connection is the uplink granularity to the execution indication information, so that the execution indication information indicates that the terminal requests or requires to turn on the uplink data transmission of the first 3GPP user plane connection.

Optionally, when the target granularity includes a bearer and/or a data flow, the execution indication information further includes one of: information related to one or more data flows performing data transmission control corresponding to the first 3GPP user plane connection, or information related to one or more bearers performing data transmission control corresponding to the first 3GPP user plane connection.

The description of the information related to one or more data flows and the information related to one or more bearers are the same as those of the previous embodiments, and will not be described in detail.

For example, assuming that the terminal needs to turn off the data transmission of the first QoS flow of the first 3GPP user plane connection this time, the terminal may select, from all the candidate execution identifications, a candidate execution identification for indicating turning off the data transmission and a candidate execution identification for indicating the data flow, respectively serving as the execution identification for indicating the data turning off transmission related to the first 3GPP user plane connection and the execution identification for indicating that the target granularity of the data transmission control related to the first 3GPP user plane connection is the data flow, and add an execution identification for indicating that the data turning off transmission related to the first 3GPP user plane connection, the execution identification for indicating that the target granularity of the data transmission control related to the first 3GPP user plane connection is the data flow and the ID of the first QoS flow to the execution indication information, so that the execution indication information indicates that the terminal requests or requires to turn off the data transmission of the first QoS flow of the first 3GPP user plane connection.

For example, assuming that the terminal needs to turn on the downlink data transmission of the first bearer of the first 3GPP user plane connection this time, the terminal may select, from all the candidate execution identifications, a candidate execution identification for indicating turning on the data transmission, a candidate execution identification for indicating the bearer granularity, and a candidate execution identification for indicating the downlink granularity, respectively serving as the execution identification for indicating the data turning on transmission related to the first 3GPP user plane connection, an execution identification for indicating that the target granularity of the data transmission control related to the first 3GPP user plane connection is the bearer granularity, and the execution identification for indicating that the target granularity of the data transmission control related to the first 3GPP user plane connection is the downlink granularity, and add an execution identification for indicating that the data turning on transmission related to the first 3GPP user plane connection, an execution identification for indicating that the target granularity of the data transmission control related to the first 3GPP user plane connection is the bearer granularity, the execution identification for indicating that the target granularity of the data transmission control related to the first 3GPP user plane connection is the downlink granularity, and the ID of the first bearer to the execution indication information, so that the execution indication information indicates that the terminal requests or requires to turn on the downlink data transmission of the first bearer of the first 3GPP user plane connection.

For example, assuming that the terminal needs to switch the data transmission of the first 3GPP user plane connection this time, the terminal may select, from all the candidate execution identifications, a candidate execution identification for indicating data switching and a candidate execution identification for indicating that the target granularity of the data transmission control is the 3GPP user plane connection, respectively serving as the execution identification for indicating data switching related to the first 3GPP user plane connection and the execution identification for indicating that the target granularity of the data transmission control related to the first 3GPP user plane connection is the 3GPP user plane connection, and add an execution identification for indicating data switching related to the first 3GPP user plane connection and the execution identification for indicating that the target granularity of the data transmission control corresponding to the first 3GPP user plane connection is the 3GPP user plane connection to the execution indication information, so that the execution indication information indicates that the terminal requests or requires to switch the data transmission of the first 3GPP user plane connection.

Optionally, the above requesting or requiring to switch data transmission on the first 3GPP user plane connection may specifically refer to requesting or requiring to switch data transported over the first 3GPP user plane connection to another 3GPP user plane connection.

In one case, if only two 3GPP user plane connections are established by the current terminal, sending the above execution indication information may indicate switching data transported over the first 3GPP user plane connection to another 3GPP user plane connection. That is, the execution indication information may no longer carry other content. Alternatively, the execution indication information may further include an identification of the first 3GPP user plane connection to explicitly indicate switching data transported over the first 3GPP user plane connection to another 3GPP user plane connection.

In one case, if only the first 3GPP user plane connection is established by the current terminal, the above execution indication information may indicate switching data transported over the first 3GPP user plane connection to a 3GPP user plane connection to be established next. Further, the terminal may also send a message for requesting the establishment of the second 3GPP user plane connection to establish the second 3GPP user plane connection, and switch the data transported over the first 3GPP user plane connection to the second 3GPP user plane connection.

In one case, if three or more 3GPP user plane connections are established by the current terminal, the execution indication information may carry at least one of: an identification of the first 3GPP user plane connection or an identification of the target 3GPP connection of the switching process. In this way, the execution indication information may indicate that the switching process requested or required by the terminal this time is specifically to switch data transported over the first 3GPP user plane connection to the target 3GPP user plane connection.

Optionally, the above requesting or requiring to switch data transmission on the first 3GPP user plane connection may specifically refer to requesting or requiring to switch data transported over another 3GPP user plane connection to the first 3GPP user plane connection.

In one case, if only two 3GPP user plane connections are established by the current terminal, sending the above execution indication information may indicate switching data transported over another 3GPP user plane connection to the first 3GPP user plane connection. The execution indication information may no longer carry other content. Alternatively, the execution indication information may further include an identification of the first 3GPP user plane connection to explicitly indicate switching data transported over another 3GPP user plane connection to the first 3GPP user plane connection.

In one case, if three or more 3GPP user plane connections are established by the current terminal, the execution indication information may carry at least one of: an identification of the first 3GPP user plane connection or an identification of the source 3GPP connection of the switching process. In this way, the execution indication information may indicate that the switching process requested or required by the terminal this time is specifically to switch data transported over the source 3GPP user plane connection to the first 3GPP user plane connection.

It should be understood that this is only an exemplary description, and in actual processing, since the execution indication information may be sent via the first access network device corresponding to the first 3GPP user plane connection, the execution indication information may not need to carry the identification of the first 3GPP user plane connection, which is not limited in this embodiment. Further, the execution identification may be replaced with an execution parameter, which will not be described in detail here.

For example, assuming that the terminal needs to switch the data transmission of the first QoS flow over the first 3GPP user plane connection this time, the terminal may select, from all the candidate execution identifications, a candidate execution identification for indicating data switching and a candidate execution identification for indicating that the target granularity of data transmission control is the QoS flow, respectively serving as the execution identification for indicating data switching related to the first 3GPP user plane connection and the execution identification for indicating that the target granularity of the data transmission control related to the first 3GPP user plane connection is the QoS flow, and add an execution identification for indicating switching related to the first 3GPP user plane connection, the execution identification for indicating that the target granularity of the data transmission control related to the first 3GPP user plane connection is the QoS flow and information related to the first QoS flow to the execution indication information, so that the execution indication information indicates that the terminal requests or requires to switch the data transmission of the first 3GPP user plane connection.

Optionally, the above requesting or requiring to switch data transmission of the first QoS flow of the first 3GPP user plane connection may specifically refer to requesting or requiring to switch data transported over the first QoS flow of the first 3GPP user plane connection to another 3GPP user plane connection.

In one case, if only two 3GPP user plane connections are established by the current terminal, sending the above execution indication information may indicate switching data transported over the first QoS flow of the first 3GPP user plane connection to another 3GPP user plane connection. That is, the execution indication information may no longer carry other content.

In one case, if only the first 3GPP user plane connection is established by the current terminal, the above execution indication information may indicate switching data transported over the first 3GPP user plane connection to a 3GPP user plane connection to be established next. Further, the terminal may also send a message for requesting the establishment of the second 3GPP user plane connection to establish the second 3GPP user plane connection, and switch the data transported over the first QoS flow of the first 3GPP user plane connection to the second 3GPP user plane connection.

In one case, if three or more 3GPP user plane connections are established by the current terminal, the execution indication information may carry at least one of: an identification of the first 3GPP user plane connection or an identification of the target 3GPP connection of the switching process. In this way, the execution indication information may indicate that the switching process requested or required by the terminal this time is specifically to switch data transported over the first QoS flow of the first 3GPP user plane connection to the target 3GPP user plane connection.

It should be understood that this is only an exemplary description, and in actual processing, since the execution indication information may be sent via the first access network device corresponding to the first 3GPP user plane connection, the execution indication information may not need to carry the identification of the first 3GPP user plane connection, which is not limited in this embodiment. Further, the execution identification may be replaced with an execution parameter, which will not be described in detail here.

It should also be understood that the above description only uses the target granularity for performing data transmission control as the 3GPP user plane connection and QoS flow as an example. In actual processing, the above-mentioned 3GPP user plane connection and QoS flow can be replaced with other target granularities, or the 3GPP user plane connection and/or QoS flow granularity can be combined with other target granularities, such as uplink/downlink granularity. Various possible combinations and their related processing will not be described in detail here.

After the core network element receives the execution indication information, the following operation is further included: performing, by the core network element, data transmission control on the first 3GPP user plane connection based on the execution indication information.

Specifically, performing, by the core network element, the data transmission control on the first 3GPP user plane connection based on the execution indication information may include: performing, by the core network element, the data transmission control on the first 3GPP user plane connection based on one or more execution parameters or one or more execution identifications corresponding to the first 3GPP user plane connection included in the execution indication information.

For example, the core network element controls to turn on the uplink data transmission of the first 3GPP user plane connection when the execution indication information includes an execution identification for indicating that the data turning on transmission related to the first 3GPP user plane connection and the execution identification for indicating that the target granularity of the data transmission control related to the first 3GPP user plane connection is the uplink granularity.

For example, the core network element controls to turn off the data transmission of the first QoS flow of the first 3GPP user plane connection when the execution indication information includes an execution identification for indicating that the data turning off transmission related to the first 3GPP user plane connection, the execution identification for indicating that the target granularity of the data transmission control related to the first 3GPP user plane connection is the data flow granularity, and an ID of the first QoS flow.

For example, the core network element controls to turn off the downlink data transmission of the fisrt bearer of the first 3GPP user plane connection when the execution indication information includes an execution identification for indicating that the data turning off transmission related to the first 3GPP user plane connection, an execution identification for indicating that the target granularity of the data transmission control related to the first 3GPP user plane connection is the bearer granularity, the execution identification for indicating that the target granularity of the data transmission control related to the first 3GPP user plane connection is the downlink granularity, and the ID of the first bearer.

It should be understood that the above-mentioned example description has only taken the execution identification as an example, and the above-mentioned execution identification may be replaced with an execution parameter in actual processing, and the description will not be repeated here. It should also be understood that the above only illustrates several situations in which the indication information may be requested and the processing that the core network element may execute, and the actual processing includes but is not limited to the above several possible situations, but the embodiment is not exhaustive.

In one embodiment, the execution indication information is carried by a first request message, where the first request message is one of: a session modification request message, a connection modification request message, a service request message, a registration request message, or a tracking area update request message.

Optionally, the first request message is sent via a first 3GPP control plane connection.

Here, the first 3GPP control plane connection may correspond to the same first access network device as the first 3GPP user plane connection. Alternatively, the first 3GPP control plane connection may correspond to a different access network device or a different RAT than the first 3GPP user plane connection.

Specifically, the terminal sending the execution indication information includes: the terminal sends a first request message to a core network element via a first 3GPP control plane connection, and the first request message carries the execution indication information. The core network element receiving the execution indication information includes: the core network element receives the first request message from the terminal via the first 3GPP control plane connection. In the embodiment, the core network element may be a control plane network element.

After the core network element receives the execution indication information, the following operation is further included: the core network element sends a first response message, where the first response message carries an execution result of performing data transmission control on the first 3GPP user plane connection. Correspondingly, after the terminal sends the execution indication information, the following operation is further included: the terminal receives a first response message, where the first response message carries an execution result of performing data transmission control on the first 3GPP user plane connection.

Here, the first response message is a response message corresponding to the first request message, the type of the first response message corresponds to the first request message, and the transmission mode of the first response message also corresponds to the first request message, and the description will not be repeated.

It should be noted that the first request message may carry contents and/or parameters specified by the relevant protocol in addition to the execution indication information, and is not limited here. Accordingly, the first response message may carry contents and/or parameters specified by the relevant protocol in addition to the execution result of performing data transmission control on the first 3GPP user plane connection, which is not limited here.

In one embodiment, the terminal sending the execution indication information includes one of: the terminal sends the execution indication information to a first access network device corresponding to the first 3GPP user plane connection; or the terminal sends the execution indication information via the first 3GPP user plane connection. Correspondingly, the core network element receiving the execution indication information includes one of: the core network element receives the execution indication information from the first access network device corresponding to the first 3GPP user plane connection; or the core network element receives the execution indication information via a first 3GPP user plane connection.

Here, the terminal sending the execution indication information via the first 3GPP user plane connection may specifically mean that the terminal sends the execution indication information to the core network element via the first 3GPP user plane connection. In the embodiment, the core network element may include a control plane network element (for example, at least one of SMF, PCF, or the like), or the core network element may include a user plane network element (for example, UPF).

This embodiment is different from the previous embodiment in that the execution indication information in this embodiment may be carried via user plane data (or user plane data packets). Specifically, the execution indication information may be carried by uplink user plane data (or uplink user plane data packets).

For example, the terminal may place the execution indication information in a certain layer of the Access Stratum (AS) protocol stack, such the Service Data Adaptation Protocol (SDAP) layer, send it to the first access network device, and after being recognized by the first access network device, put it into a User Plane Part of GPRS Tunnelling Protocol (GTP-U) packet or a GTP-U packet header and send it to the user plane network element. For another example, the user plane element can read the content added by the terminal via the protocol layer between the terminal and the user plane network element (e.g., above the SDAP and GTP-U protocol layers). For example, the terminal transports the uplink user plane data packet (carrying execution indication information) via the protocol layer between the terminal and the user plane network element, and correspondingly, the user plane network element can directly read the execution indication information carried in the uplink user plane data packet, and then execute subsequent control processing.

In some embodiments, the terminal may send execution indication information a plurality of times, respectively, to request execution of data transmission control for a plurality of 3GPP user plane connections, respectively. Different execution indication information among the execution indication information sent multiple times may be carried by different first request messages among the plurality of first request messages, or may be sent via different access network devices.

In one embodiment, the terminal may establish a plurality of 3GPP user plane connections before sending the execution indication information, and the first 3GPP user plane connection is any one of a plurality of 3GPP user plane connections established by the terminal.

When the terminal establishes a plurality of 3GPP user plane connections, the SUbscription Permanent Identifiers (SUPIs) (or International Mobile Subscriber Identities (IMSIs)) corresponding to different initiations of the establishment of the 3GPP user plane connections are the same, that is, the plurality of 3GPP user plane connections correspond to the same USIM. Alternatively, when the terminal establishes a plurality of 3GPP user plane connections, the SUPIs corresponding to different initiations of the establishment of the 3GPP user plane connections are different, i.e., each corresponds to a different Universal Subscriber Identity Module (USIM).

For example, the terminal may perform different data transmission controls on different 3GPP user plane connections via different execution indication information.

For example, when the terminal needs to perform turning off data transmission on the first 3GPP user plane connection and turning on data transmission on the second 3GPP user plane connection, the processing of the terminal may include: the terminal may send execution indication information via a first access network device corresponding to the first 3GPP user plane connection, and the execution indication information carries the execution parameter (or the execution identification) corresponding to the first 3GPP user plane connection for indicating turning off data transmission; the terminal may send another execution indication information via the second access network device corresponding to the second 3GPP user plane connection, and the execution indication information carries the execution parameter (or the execution identification) corresponding to the second 3GPP user plane connection for indicating turning on data transmission. Correspondingly, the processing of the core network element may include: when receiving the execution indication information transported via the first access network device, the core network element controls to turn off data transmission on the first 3GPP user plane connection; when receiving the execution indication information transported via the second access network device, the core network element controls to turn on data transmission on the second 3GPP user plane connection. In this way, the purpose of switching data flows is achieved by turning off all data transmissions on one connection and then turning on all data transmissions on the other connection.

For example, when the terminal needs to perform turning off uplink data transmission of the first data flow on the first 3GPP user plane connection and turning on uplink data transmission of the second data flow on the second 3GPP user plane connection, the processing of the terminal may include: the terminal may send execution indication information via a first access network device corresponding to the first 3GPP user plane connection, and the execution indication information carries the execution parameter (or the execution identification) corresponding to the first 3GPP user plane connection for indicating turning off data transmission, the execution parameter (or the execution identification) corresponding to the first 3GPP user plane connection for indicating that the target granularity of data transmission control is the data flow and uplink, and information related to the first data flow; the terminal may send another execution indication information via the second access network device corresponding to the second 3GPP user plane connection, and the execution indication information carries the execution parameter (or the execution identification) corresponding to the second 3GPP user plane connection for indicating turning on data transmission, the execution parameter (or the execution identification) corresponding to the second 3GPP user plane connection for indicating that the target granularity of data transmission control is the data flow and uplink, and information related to the second data flow. Correspondingly, the processing of the core network element may include: when receiving the execution indication information transported via the first access network device, the core network element controls to turn off uplink data transmission of the first data flow on the first 3GPP user plane connection; when receiving the execution indication information transported via the second access network device, the core network element controls to turn on uplink data transmission of the second data flow on the second 3GPP user plane connection. In this way, the purpose of switching data flows is achieved by turning off part of the data transmission on one connection and then turning on part of the data transmission on the other connection.

It should be understood that the above is merely an exemplary description, and in actual processing, the contents included in the execution indication information that may be issued for each 3GPP user plane connection include but are not limited to the above contents, but the present embodiment is not exhaustive.

It should also be understood that when the terminal only performs the data transmission control whose target granularity is uplink, the core network element may not perform the corresponding data transmission control processing, that is, the terminal may only send execution indication information (including the execution parameter or identification corresponding to the first 3GPP user plane connection for indicating that the target granularity of the data transmission control is uplink) to the core network element, and the terminal itself controls the turning on or turning off of the uplink data, and the function of the execution indication information may be to make the core network element know that the first 3GPP user plane connection of the terminal turns off the uplink data transmission and the second 3GPP user plane connection turns on the uplink data transmission, that is, the core network element may no longer perform the corresponding control processing.

In one embodiment, the terminal may switch all data transported by one access to another access, or the terminal may switch all uplink data or all downlink data transported by one access to another access. In such an embodiment, the first request message carrying the execution indication information may include one of a registration request message, a service request message, a TAU request message, or the like.

When the terminal needs to perform turning off uplink data transmission on the first 3GPP user plane connection and turning on uplink data transmission on the second 3GPP user plane connection, the processing of the terminal may include: the terminal may send execution indication information via a first access network device corresponding to the first 3GPP user plane connection, and the execution indication information carries the execution parameter (or the execution identification) corresponding to the first 3GPP user plane connection for indicating turning off data transmission, and the execution parameter (or the execution identification) corresponding to the first 3GPP user plane connection for indicating that the target granularity of data transmission control is uplink; the terminal may send another execution indication information via the second access network device corresponding to the second 3GPP user plane connection, and the execution indication information carries the execution parameter (or the execution identification) corresponding to the second 3GPP user plane connection for indicating turning on data transmission, and the execution parameter (or the execution identification) corresponding to the second 3GPP user plane connection for indicating that the target granularity of data transmission control is uplink. Correspondingly, the processing of the core network element may include: when receiving the execution indication information transported via the first access network device, the core network element controls to turn off all uplink data transmissions on the first 3GPP user plane connection; when receiving the execution indication information transported via the second access network device, the core network element controls to turn on all uplink data transmissions on the second 3GPP user plane connection. In this case, the terminal may only send execution indication information to the core network element, the terminal may only send execution indication information (including the execution parameter or identification corresponding to the first 3GPP user plane connection for indicating that the target granularity of the data transmission control is uplink) to the core network element, and the terminal itself controls the turning on or turning off of the uplink data, and the function of the execution indication information may be to make the core network element know that the first 3GPP user plane connection of the terminal turns off the uplink data transmission and the second 3GPP user plane connection turns on the uplink data transmission, that is, the core network element may no longer perform the corresponding control processing.

Alternatively, when the terminal needs to perform turning off downlink data transmission on the first 3GPP user plane connection and turning on downlink data transmission on the second 3GPP user plane connection, the processing of the terminal may include: the terminal may send execution indication information via a first access network device corresponding to the first 3GPP user plane connection, and the execution indication information carries the execution parameter (or the execution identification) corresponding to the first 3GPP user plane connection for indicating turning off data transmission, and the execution parameter (or the execution identification) corresponding to the first 3GPP user plane connection for indicating that the target granularity of data transmission control is downlink; the terminal may send another execution indication information via the second access network device corresponding to the second 3GPP user plane connection, and the execution indication information carries the execution parameter (or the execution identification) corresponding to the second 3GPP user plane connection for indicating turning on data transmission, and the execution parameter (or the execution identification) corresponding to the second 3GPP user plane connection for indicating that the target granularity of data transmission control is downlink. Correspondingly, the processing of the core network element may include: when receiving the execution indication information transported via the first access network device, the core network element controls to turn off all downlink data transmissions on the first 3GPP user plane connection; when receiving the execution indication information transported via the second access network device, the core network element controls to turn on all downlink data transmissions on the second 3GPP user plane connection.

In one embodiment, the terminal may transport all data on only one Access at a certain time point or time period, and transport all data via another Access at the next time point or time period. The all data refers to data transported on all PDU sessions (or the only 3GPP user plane connection currently established), so this embodiment may not distinguish PDU session granularity or data flow granularity, and only turn on and off as a whole.

In such an embodiment, the terminal may establish only the first 3GPP user plane connection before sending the execution indication information. The first request message carrying the execution indication information may include one of a registration request message, a service request message, a TAU request message, or the like.

The processing of the terminal may include: the terminal may send an execution indication information via a first access network device corresponding to the first 3GPP user plane connection, and the execution indication information carries an execution parameter (or an execution identification) corresponding to the first 3GPP user plane connection for indicating turning off data transmission (or may carry an execution parameter or identification corresponding to the first 3GPP user plane connection indicating that the target granularity is PDU session); receive a first response message from the core network element via the first access network device, and the first response message carries an execution result of turning off all data transported via the first access network device; the terminal may send another execution indication information via the second access network device, and the execution indication information carries an execution parameter (or an execution identification) for indicating turning on data transmission, and then receive a first response message from the core network element via the second access network device, the first response message carries an execution result of turning off all data transported via the second access network device. Correspondingly, the processing of the core network element may include: when receiving the execution indication information transported via the first access network device, the core network element controls to turn off all data transmission on the first 3GPP user plane connection, and sends a first response message carrying the execution result of turning off all data transported via the first access network device; when receiving the execution indication information transported via the second access network device, the core network element controls to turn on or activate all data transmission on the second 3GPP user plane connection, and sends a first response message carrying an execution result of turning off all data transmission via the second access network device.

It should be understood that the first 3GPP user plane connection and the second 3GPP user plane connection are only taken as exemplary descriptions here, and in actual processing, data transported by other 3GPP user plane connections (or PDU sessions) may be turned on or turned off as a whole using the above processing manner, which will not be described in detail one by one.

In some embodiments, the core network element may also actively trigger control of data transmission on one or more 3GPP user plane connections of the terminal.

In this embodiment, the core network element may send execution indication information to the terminal, and the content of the execution indication information may be similar to the content of the execution indication information from the terminal, except that the sending subject of this embodiment becomes the core network element, so the description will not be repeated.

Optionally, the core network element may perform transmission control on data whose target granularity is downlink, in this case, the terminal may not perform processing, and may determine that the downlink data transmission is switched from one 3GPP user plane connection to another 3GPP user plane connection only via the execution indication information from the core network element.

For example, when the core network element needs to perform turning off downlink data transmission of the first data flow on the first 3GPP user plane connection of the terminal and turning on downlink data transmission of the second data flow on the second 3GPP user plane connection of the terminal, the processing of the core network element may include: the core network element may send execution indication information via a first access network device corresponding to the first 3GPP user plane connection, and the execution indication information carries the execution parameter (or the execution identification) corresponding to the first 3GPP user plane connection for indicating turning off data transmission, the execution parameter (or the execution identification) corresponding to the first 3GPP user plane connection for indicating that the target granularity of data transmission control is the data flow and downlink, and information related to the first data flow; the core network element may send another execution indication information via the second access network device corresponding to the second 3GPP user plane connection, and the execution indication information carries the execution parameter (or the execution identification) corresponding to the second 3GPP user plane connection for indicating turning on data transmission, the execution parameter (or the execution identification) corresponding to the second 3GPP user plane connection for indicating that the target granularity of data transmission control is the data flow and downlink, and information related to the second data flow.

Optionally, the core network element may perform transmission control on data whose target granularity is downlink, in this case, the terminal may perform corresponding processing based on the execution parameter (or the execution identification) included in the execution indication information to complete the switching of uplink data transmission from one 3GPP user plane connection to another 3GPP user plane connection.

For example, when the core network element needs to perform turning off uplink data transmission on the first 3GPP user plane connection of the terminal and turning on uplink data transmission on the second 3GPP user plane connection of the terminal, the processing of the core network element may include: the core network element may send execution indication information via a first access network device corresponding to the first 3GPP user plane connection, and the execution indication information carries the execution parameter (or the execution identification) corresponding to the first 3GPP user plane connection for indicating turning off data transmission, and the execution parameter (or the execution identification) corresponding to the first 3GPP user plane connection for indicating that the target granularity of data transmission control is uplink; the core network element may send another execution indication information via the second access network device corresponding to the second 3GPP user plane connection, and the execution indication information carries the execution parameter (or the execution identification) corresponding to the second 3GPP user plane connection for indicating turning on data transmission, and the execution parameter (or the execution identification) corresponding to the second 3GPP user plane connection for indicating that the target granularity of data transmission control is uplink. Correspondingly, the processing of the terminal may include: when receiving the execution indication information transported via the first access network device, the terminal controls to turn off uplink data transmission on the first 3GPP user plane connection; when receiving the execution indication information transported via the second access network device, the terminal controls to turn on or activate all data transmission on the second 3GPP user plane connection.

It should be understood that the above is only an exemplary description. In actual processing, the core network element can actively trigger data transmission control for other one or more target granularities, but as long as the processing of data transmission control needs to include the control of uplink data transmission, the terminal can perform corresponding control processing, and as long as the processing of data transmission control only includes the control of downlink data transmission, the terminal may not perform corresponding processing, which will not be described in detail here.

In some embodiments, the core network element may receive execution indication information from the application server, and the core network element may control data transmission of one or more 3GPP user plane connections of the terminal based on the execution indication information from the application server.

In this embodiment, the content of the execution indication information from the application server may be similar to the content of the execution indication information from the terminal, the only difference is that the sending subject of this embodiment becomes the application server and the execution indication information may be carried by downlink user plane data (or downlink user plane data packet), which will not be repeated here. The data transmission control performed by the core network element based on the execution indication information is also similar to the related processing after the core network element receives the execution indication information from the terminal in the aforementioned embodiment, and thus will not be described in detail.

Next, the implementation provided in the present disclosure will be described with reference to various examples.

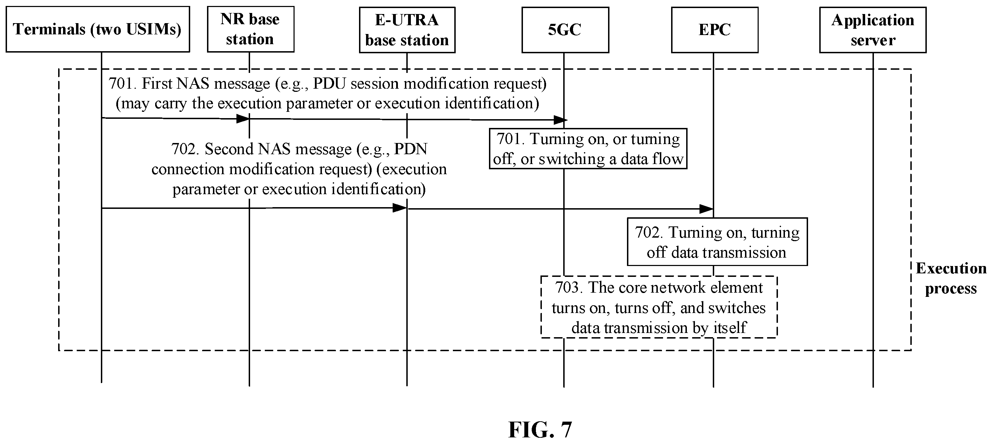

In embodiment 1, with reference to FIG. 7, in FIG. 7, the terminal may have two USIMs, and each of them performs different connection-related processing via different USIMs. In the execution process illustrated in FIG. 7, after the terminal has established the plurality of user plane connections via the plurality of accesses (i.e., the NR base station and the E-UTRA base station), one or more of the operations 701, 702, and 703 may be performed to turn on, turn off data transmission on a user plane connection, or switch data transmission on a user plane connection to another connection.

At operation 701: the terminal initiates a first NAS message (e.g., a PDU session modification request) to the 5GC (the first NAS message may be sent via the NR base station, and the first NAS message is the first request message in the previous embodiments), and the first NAS message may carry an execution parameter or an execution identification.

The execution parameter or execution identification may be a parameter generated by the terminal itself (such as a predefined parameter), or may be obtained by negotiation, but this embodiment is not limited, and the possible contents of the execution parameter or execution identification are the same as those of the previous embodiments, and will not be repeated.

Correspondingly, after receiving the execution parameter, the 5GC core network element performs the action corresponding to the execution parameter. That is, one or more combinations of the following three dimensions: turning on, or turning off, or switching the data flow (or turning on, or turning off, or switching data transmission); the granularity of turning on, or turning off, or switching the data flow, the QoS flow granularity or the entire PDU session granularity, and if it is the QoS flow granularity, which QoS flow may be further determined according to the indication in the first NAS message (such as indicating QoS flow ID or filter information); turning on, or turning off, or switching the uplink and/or downlink data flows.

At operation 702: the terminal initiates a second NAS message (e.g., a PDN connection modification request) to the EPC (the second NAS message may be sent via the E-UTRA base station), and the second NAS message may carry an execution parameter or an execution identification.

The execution parameter or execution identification may be a parameter generated by the terminal itself (such as a predefined parameter), or may be obtained by negotiation, but this embodiment is not limited, and the possible contents of the execution parameter or execution identification are the same as those of the previous embodiments, and will not be repeated.

Correspondingly, after receiving the execution parameter, the EPC core network element performs the action corresponding to the execution parameter. That is, one or more combinations of the following three dimensions: turning on, or turning off, or switching the data flow; the granularity of turning on, or turning off, or switching the data flow, the bearer granularity or the entire PDU session granularity, and if it is the bearer granularity, which bearer may be further determined according to the indication in the second NAS message; turning on, or turning off, or switching the uplink and/or downlink data.

At operation 703: the 5GC and/or EPC control plane network element turn on, turn off, switch data transmission, and the like for one or more 3GPP user plane connections of the terminal by themselves.

In addition, an application server is also illustrated in FIG. 7, and although the related processing of the application server is not involved in this example, it is illustrated for the sake of architectural integrity of the example, and the related description thereof will not be given.

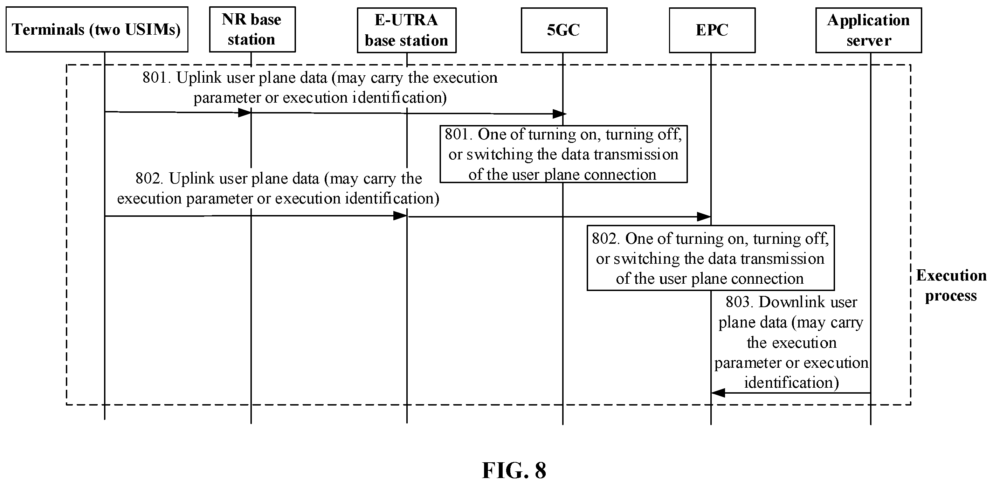

In embodiment 2, the terminal and the core network element may trigger data transmission control via user plane messages. Specifically, the terminal carries the execution identification and/or the execution parameter via the user plane data packet, and after being read by a network element of the 5GC or EPC, the corresponding action (such as turning on, turning off, or switching data transmission) is performed. The execution process illustrated in FIG. 8 may be that after the terminal has established the plurality of user plane connections via accesses (i.e., the NR base station and the E-UTRA base station), one or more of the operations 801, 802, and 803 may be performed to complete the processing of turning on, turning off data transmission on a user plane connection, or switching data transmission on a user plane connection to another connection. Details are as follows.

At operation 801: the terminal sends uplink user plane data to the 5GC via the NR base station, and the uplink user plane data may carry the execution parameter or the execution identification.

Correspondingly, after receiving the execution parameter or the execution identification, the 5GC core network element (user plane network element) performs the action corresponding to the execution parameter or the execution identification. For example, one of actions of turning on, turning off, or switching the data transmission of the user plane connection can be performed. Here, the execution parameter or the execution identification may be generated locally by the terminal (the predefined parameter), or may be acquired by the terminal via a negotiation process, and are not limited in this embodiment.

At operation 802: the terminal initiates uplink user plane data to the EPC via the E-UTRA base station, and the uplink user plane data may include the execution parameter or the execution identification.

Correspondingly, after receiving the execution parameter or the execution identification, the EPC core network element (user plane network element) performs the action corresponding to the execution parameter or the execution identification. For example, one of actions of turning on, turning off, or switching the data transmission of the user plane connection can be performed. Here, the execution parameter or the execution identification may also be generated locally by the terminal (the predefined parameter), or may be acquired by the terminal via a negotiation process, and are not limited in this embodiment.

For operations 801 and 802, the terminal may place the execution parameter or execution identification in a certain layer of the AS protocol stack, such AS the SDAP layer, and then the base station, after recognizing it, places it into the GTP-U data packet or the GTP-U data packet header to send to the user plane network element. It may also be added via a protocol layer (e.g. above the SDAP and GTP-U protocol layers) between the UE and the user plane network element, which can be read by the user plane network element.

At operation 803 (optionally): the EPC user plane network element (or the 5GC user plane network element) may receive downlink user plane data from the application server, which may also carry the execution parameter or the execution identification, and then the EPC user plane network element may perform corresponding action after receiving the execution parameter or the execution identification.

In the processing provided in Embodiment 2, the terminal may generate the execution parameter or the execution identification locally. Alternatively, the terminal may negotiate with the core network element in advance to obtain the execution parameter and/or the execution identification.

Operation 803 is an optional operation. For example, if the AF needs to trigger the data transmission control of the user plane connection in a case where the negotiation is performed in advance, operation 803 may be performed. The execution parameter or execution identification carried by the AF is configured by the core network element during the negotiation process, and the AF may obtain the execution parameter or execution identification from the core network element side.

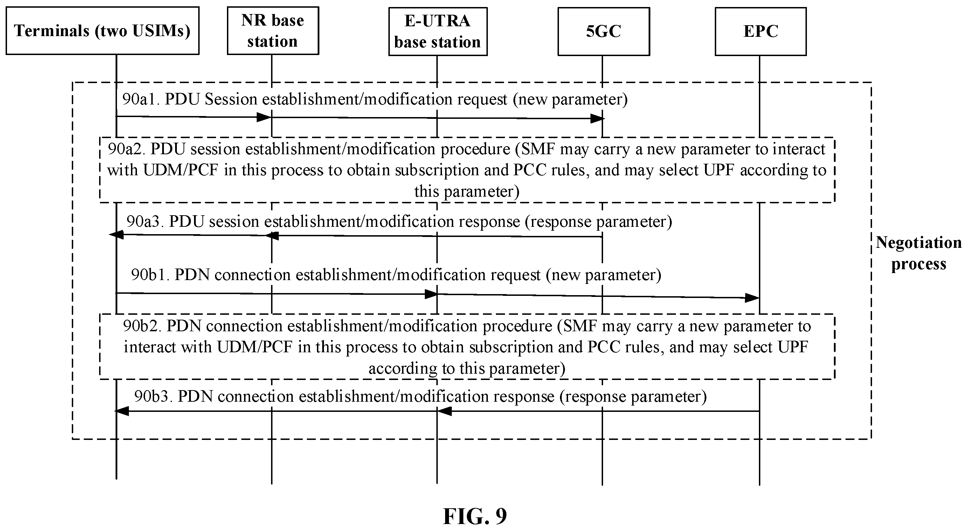

In embodiment 3, the terminal and the core network element need to perform the negotiation process. Specifically, with reference to FIG. 9, in FIG. 9, the terminal may have two USIMs, and different connection-related processing is performed via different USIMs respectively. Embodiment 3 may be used in combination with the aforementioned embodiment 1 or embodiment 2, for example, it may be performed before embodiment 1 or before embodiment 2. Referring to FIG. 9, a negotiation process between a terminal and a core network element includes operations as follows.

At operation 90a1: the terminal initiates a PDU session modification/establishment request (i.e., the second request message in the previous embodiment) to the 5GS core network (i.e., a core network element) via the 5GS NAS (i.e., via the NR base station, which may be the first access network device in the previous embodiment) to initiate a PDU session modification/establishment process, and the PDU session modification/establishment request may carry the following new parameters for the negotiation process in addition to the existing parameters (parameters specified by the existing protocol) to establish the first 3GPP user plane connection (i.e., the PDU session) in the 5GS.

A first identification: having the capability to establish a plurality of user plane connections or requesting to establish a plurality of user plane connections, and supporting steering and/or splitting and/or switching (hereinafter referred to as SSS) of data between the plurality of user plane connections, respectively described as follows. Access Traffic Steering: the procedure that selects an access network for a new data flow and transfers the traffic of this data flow over the selected access network. Access Traffic Switching: the procedure that moves all traffic of an ongoing data flow from one access network to another access network. Access Traffic Splitting: the procedure that splits the traffic of a data flow across multiple access networks. When traffic splitting is applied to a data flow, some traffic of the data flow is transferred via one access and some other traffic of the same data flow is transferred via another access. It should be noted that access traffic steering is applicable between multiple accesses.

An association identification: supporting multiple user plane connections between SSS to correspond to the same association identification.

A connection identification: a parameter that identifies the first 3GPP user plane connection (i.e., the identification of the first 3GPP user plane connection of the previous embodiment), and different 3GPP user plane connections use different connection identifications.

It should be pointed out that the association identification and the connection identification can be combined into one parameter such as the second identification, the second identification = the association domain value + the coding domain value, the association domain value plays the role of the association identification, and the coding domain value plays the role of identifying the specific connection.

An execution capability information (or an execution request information) includes at least one of: performing data transmission of turning on, or turning off the user plane connection, or performing data transmission switching; the granularity of execution is the QoS Flow granularity or the entire PDU session granularity, and if it is the QoS Flow granularity, which QoS flow(s) may be further indicated (such as indicating QoS flow ID or filter information); performing a data flow for uplink (UL) and/or downlink (DL).

At operation 90a2: A PDU session establishment/modification procedure is performed. For example, in this process, SMF can carry a new parameter to interact with UDM/PCF to obtain subscription and PCC rules, and may select UPF according to this parameter.

At operation 90a3: the 5GS core network element sends a PDU session establishment/modification response message (i.e., the second response message of the aforementioned embodiment) to the terminal.

The second response message may carry a response parameter (the execution-related parameter in the aforementioned embodiment), that is, an action that the network side allows/requests/requires the terminal to perform, and the response parameter includes at least one of: an execution parameter or an execution identification. Where the execution parameter includes at least one of the following information: whether to turn on or turn off a data flow, and whether to switch data transmission; the granularity of turning on, turning off, or switching the data flow, the QoS Flow granularity or the entire PDU session granularity, and if it is the QoS Flow granularity, which QoS flow(s) may be further indicated (such as indicating the QoS flow ID or filter information); turning on, turning off, or switching uplink and/or downlink data flows. The execution identification is used to carry the identification in the execution phase, whereby the network can perform the corresponding action (one or a combination of the specific actions and/or granularities corresponding to the three execution parameters above).

At operation 90b1: the terminal sends a PDN connection establishment/modification request to the EPS core network via the EPS NAS (sends a PDN connection establishment/modification request to the EPC via the E-UTRA base station) to initiate a PDN connection establishment/modification process, where the PDN connection establishment/modification request may carry a new parameter in addition to existing parameters, which is the same or similar to operation 90a1, and the control granularity should be the EPS Bearer granularity, which may carry the EPS Bearer ID or filter information, etc.

In this operation, the PDN connection establishment/modification request from the terminal can be understood as the terminal sending the second request message a plurality of times. Operation 90b1 (i.e., establishing or modifying a PDN connection over the EPS) may be performed before operation 90a1, in which case operation 90a1 may optionally carry negotiation related parameters.

Here, the PDN connection establishment request can be carried in the Attach or TAU procedure and sent to the EPC core network element.

In addition, the case where the establishment request is initiated in operations 90a1 and 90b1 includes: the SUPIs (or IMSIs) corresponding to the two initiations are the same (i.e., corresponding to the same USIM); or the SUPIs corresponding to the two initiations are different (i.e., each corresponds to a different USIM).

At operation 90b2: A PDN connection establishment/modification procedure is performed. For example, in this process, SMF can carry a new parameter to interact with UDM/PCF to obtain subscription and PCC rules, and may select UPF according to this parameter.

At operation 90b3: the EPS core network element sends a PDN connection establishment/modification response message (response parameter) to the terminal. The description of the response parameter in this operation is similar to that in operation 90a3, and will not be described in detail.

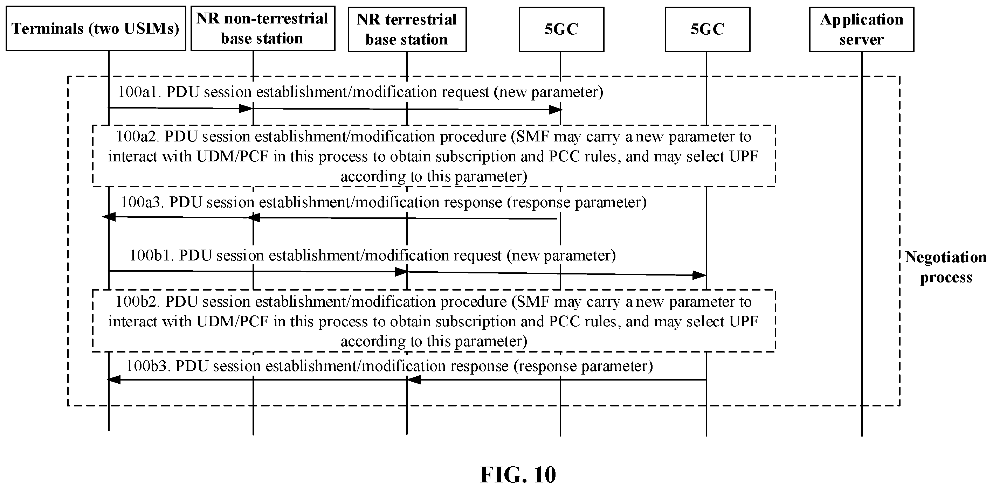

In embodiment 4: in a scenario involving an NR base station and another NR base station, both base stations are connected to the 5GC, which may be the same 5GC or different 5GCs, depending on the network selection of PLMN, and is not limited in this embodiment. As shown in FIG. 10, two base stations may correspond to different RAT types, such as an NR terrestrial base station (NR terrestrial access) and an NR non-terrestrial base station (such as an NR satellite base station (NR satellite access)), where an NR terrestrial base station refers to a base station that communicates with a terminal using 3GPP NR access technology at an air interface, and an NR non-terrestrial base station (such as an NR satellite base station) refers to a base station that communicates with a terminal using 3GPP-NR-SAT access technology at an air interface. The negotiation process in such a scenario may include operations as follows.

At operation 100a1: the terminal initiates a PDU session modification/establishment request (i.e., the second request message in the aforementioned embodiment) to the 5GS core network (5GC) via an NR non-terrestrial base station (such as an NR satellite base station) to initiate a PDU session modification/establishment process, and the PDU session modification/establishment request may carry the following new parameters for the negotiation process in addition to the existing parameters (parameters specified by the existing protocol) to establish the first 3GPP user plane connection (i.e., the PDU session) in the 5GS, and the relevant description of the new parameters is the same as that in operation 90a1, and will not be described in detail.

At operation 100a2: a PDU session establishment/modification procedure is performed. For example, in this process, SMF can carry a new parameter to interact with UDM/PCF to obtain subscription and PCC rules, and may select UPF according to this parameter.

At operation 100a3: the 5GS core network element sends a PDU session establishment/modification response message (i.e., the second response message of the aforementioned embodiment) to the terminal, and the PDU session establishment/modification response message may carry a response parameter, and the related description of the response parameter is the same as the description in operation 90a3 of the aforementioned embodiment, and will not be described in detail.

Operations 100b1 to 100b3 are similar to operations 100a1 to 100a3, except that the NR non-terrestrial base station is replaced with the NR terrestrial base station, which will not be described in detail.

After completion of embodiment 4, similar processing to that of embodiment 1 may be performed, except that the E-UTRA base station in embodiment 1 is replaced with an NR non-terrestrial base station, and thus the description will not be repeated.

Alternatively, after completion of embodiment 4, similar processing to that of embodiment 2 may be performed, except that the E-UTRA base station in embodiment 2 is replaced with an NR non-terrestrial base station, and thus the description will not be repeated.

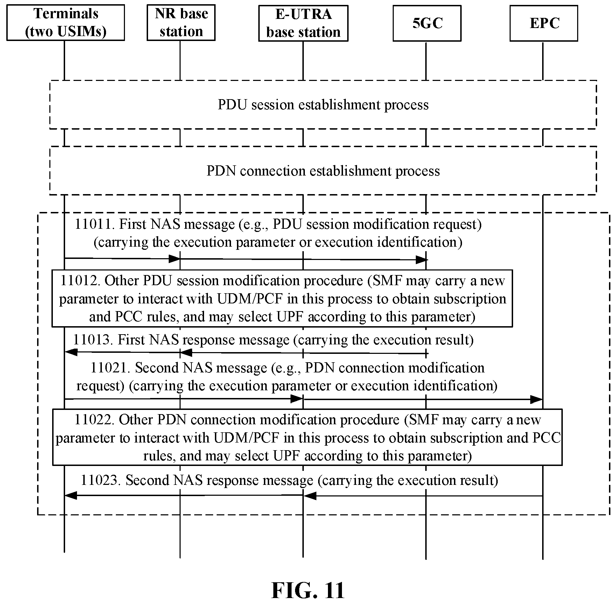

In embodiment 5: the terminal directly triggers the operation. In this embodiment, the terminal directly sends the NAS message to turn on and turn off the data transmission. The specific procedure is shown in FIG. 11 and includes the following operations.

First, the PDU session and PDN connection are established on the 5GS and EPS by performing the PDU session establishment process and the PDN connection establishment process.

At operation 11011: the terminal initiates the first NAS message (specifically, the first NAS message may be sent via the NR base station, and the first NAS message may be the first request message in the previous embodiment), such as a PDU session modification request, which includes an execution parameter or an execution identification (i.e., execution indication information), and the related description of the execution parameter or the execution identification is the same as that in the previous embodiment, and will not be described in detail.

At operation 11012: the 5GC internally determines to turn on, turn off, or switch transmission of the corresponding data according to the request of the terminal, and performs the remaining PDU session modification procedure. For example, in this process, SMF can carry a new parameter to interact with UDM/PCF to obtain subscription and PCC rules, and may select UPF according to this parameter.

At operation 11013: the 5GC sends a first NAS response message carrying an execution result, which is used to indicate whether or not the action requested by the terminal has been performed.

The operations 11021 to 11023 are similar to the operations 11011 to 11013, and the difference is that the data transmission of the PDN connection is turned on or turned off, the details are as follows.

At operation 11021: the terminal initiates a second NAS message (specifically, the second NAS message may be sent via the E-UTRA base station), such as a PDN connection modification request, which includes an execution parameter or an execution identification (i.e., execution indication information), and the related description of the execution parameter or the execution identification is the same as that in the previous embodiment, and will not be described in detail.

At operation 11022: the EPC internally determines to turn on, turn off, or switch transmission of the corresponding data according to the request of the UE, and performs the remaining PDN connection modification procedure. For example, in this process, SMF can carry a new parameter to interact with UDM/PCF to obtain subscription and PCC rules, and may select UPF according to this parameter.

At operation 11023: the EPC sends a second NAS response message carrying an execution result, which is used to indicate whether or not the request of the terminal has been performed.

In addition, the case where the establishment request is initiated in operations 11021 to 11023 and operations11011 to 11013 includes: the SUPIs (or IMSIs) corresponding to the two initiations are the same (i.e., corresponding to the same USIM); or the SUPIs corresponding to the two initiations are different (i.e., each corresponds to a different USIM).

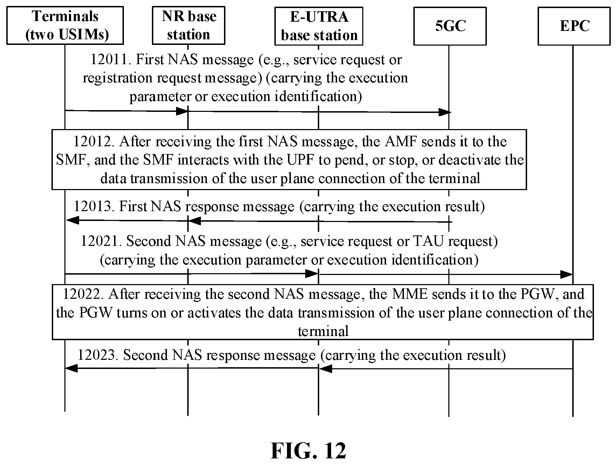

In embodiment 6: the terminal directly triggers all data flows. If the terminal transports data on only one access at one time point, and/or the UE switches all data transported by the current access to another access, the following procedure as shown in FIG. 12 may be performed.

At operation 12011: the terminal sends a first NAS message (which may be a Service Request or a Registration Request message) to pause/stop/deactivate all data corresponding to the terminal (that is, one USIM (SUPI) of the terminal).

Because of the terminal granularity, the execution parameter or execution identification carried in the first NAS message only needs to indicate whether to turn on or turn off the data flow (in this example, to turn off the data flow). Here, the all data refers to data transported on all PDU sessions, so there is no need to distinguish PDU session granularity and QoS flow granularity, and only to turn on or turn off as a whole.

In some possible examples, the execution parameter or execution identification carried in the first NAS message may also indicate turning on, turning off the uplink and/or downlink data flows.

In this embodiment, the execution parameter or execution identification is pre-configured/pre-defined locally by the terminal, and no negotiation process is required.

At operation 12012: the 5GC performs a process of pending, stopping, or disabling/disactiving data transmission of the user plane connection of the terminal. Specifically, the AMF in the 5GC receives the first NAS message and sends it to the SMF, and the SMF interacts with the UPF to pend, stop, or disable/disactive data transmission of the user plane connection of the terminal.

At operation 12013: the 5GC sends the first NAS response message to the terminal, which carries the execution result, and specifically, the AMF may send the execution result to the terminal.

It should be noted that due to the limited number of radios frequencies on the terminal (e.g., single radio capability), the terminal may initiate operation 12021 before receiving the first NAS response message.

At operation 12021: the terminal sends a second NAS message (which may be a Service Request or a TAU request message) to turn on/activate all data corresponding to the terminal (that is, one USIM (SUPI) of the terminal). Because of the terminal granularity, the execution parameter or execution identification carried in the second NAS message only needs to indicate whether to turn on or turn off the data flow (in this example, to turn on the data flow).

In some possible examples, the execution parameter or execution identification carried in the second NAS message may also indicate turning on, turning off the uplink and/or downlink data flows.

At operation 12022: the EPC performs a process of turning on/activating data transmission of the user plane connection of the terminal. Specifically, the MME in the EPC receives the second NAS message and sends it to the PGW, and the PGW turns on or activates data transmission of the user plane connection of the terminal.

At operation 12023: the EPC sends the second NAS response message to the terminal, which carries the execution result, and specifically, the MME may send the execution result to the UE.

The SUPIs corresponding to operations 12011 to 12013 and operations 12021 to 12023 may be the same (such as the same USIM), or may be two different SUPIs (two USIMs). The turning on or turning off operations of operations 12011 to 12013 and operations 12021 to 12023 may be reversed.

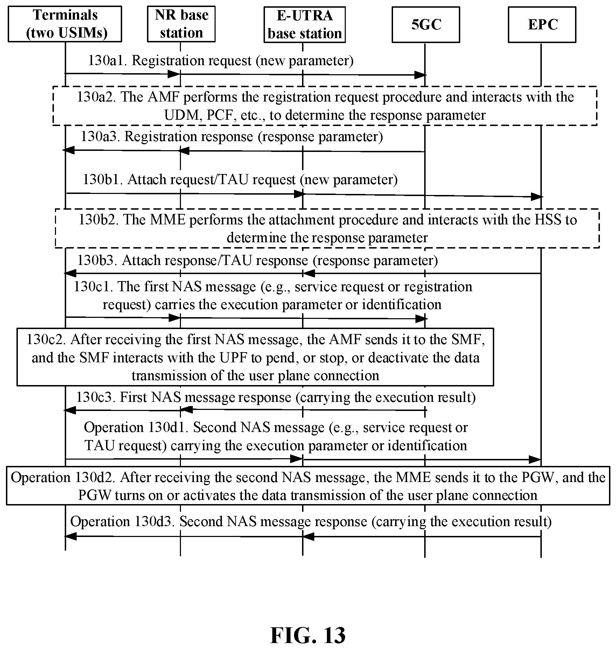

In embodiment 7: the terminal and the core network element need to perform the negotiation process and trigger the data transmission control via the control plane message. In particular, with reference to FIG. 13, the following procedure is included.

At operation 130a1: the terminal initiates a registration request (i.e., the second request message in the aforementioned embodiment) to the 5GS core network (5GC is specifically a core network element) via the NR base station, and the registration request may carry new parameters in addition to existing parameters (parameters specified in the existing protocol), and the contents of the new parameters are the same as those in the aforementioned embodiment, so no further description will be made.

At operation 130a2: the 5GC (e.g., AMF) AMF executes the registration request procedure and interacts with the UDM, PCF, etc. to determine the response parameter.

At operation 130a3: the 5GC sends a registration response message (that is, the second response message of the aforementioned embodiment) to the terminal, which may carry the response parameter (execution-related parameters in the aforementioned embodiment), and will not be described in detail.

At operation 130b1: the terminal sends an attach request/TAU request to the EPS core network (EPC) via the E-UTRA base station, and the attach request/TAU request may carry new parameters in addition to existing parameters.

At operation 130b2: an EPC (such as an MME) performs an attach procedure and interacts with the HSS or the like to determine the response parameter.

At operation 130b3: the EPS core network element sends an attach response/TAU response (response parameter) to the terminal. The description of the response parameter in this operation is similar to that of the previous embodiment, and will not be described in detail.

At operation 130c1: the terminal initiates a first NAS message (service request or registration request) to the 5GC, and the first NAS message may carry the execution parameter or execution identification, and the execution parameter or execution identification may be obtained from operations 130a3 and/or 130b3, or may be the parameter (such as the predefined parameter) generated by the terminal itself.

At operation 130c2: the 5GC core network element (such as AMF) receives the first NAS message and sends it to the SMF, and the SMF interacts with the UPF to pend, stop, or disable/disactive the data transmission of the user plane connection of the terminal.

At operation 130c3: the 5GC sends the first NAS response message to the terminal, which carries the execution result, and specifically, the AMF may send the execution result to the terminal.

At operation 130d1: the terminal sends a second NAS message (which may be a Service Request or a TAU request message) to turn on/activate all data corresponding to the terminal (that is, one USIM (SUPI) of the terminal). The execution parameter or execution identification carried in the second NAS message only needs to indicate whether to turn on or turn off the data flow (in this example, to turn on the data flow).

At operation 130d2: the EPC performs a process of turning on/activating data transmission of the user plane connection of the terminal. Specifically, the MME in the EPC receives the second NAS message and sends it to the PGW, and the PGW switches on/turns on or enables/enactivates data transmission of the UE user plane connection.

At operation 130d3: the EPC sends the second NAS response message to the terminal, which carries the execution result, and specifically, the MME may send the execution result to the UE.

It should be noted that embodiments 6 and 7 may also be used in a scenario of an NR terrestrial base station + an NR satellite base station, and the description will not be repeated here.

It should also be noted that some network elements of the 5GC and the EPC according to embodiments 1 to 7 may be combined or may be completely separated. That is, the processing procedures provided in embodiments 1 to 7 may be applied to any one of the two possible architectural scenarios illustrated in FIGS. 6a and 6b.

It can be seen that by adopting the above scheme, when the terminal supports establishing a plurality of 3GPP user plane connections, the terminal initiates data transmission control for any one of the 3GPP user plane connections. As described above, when the terminal supports multiple 3GPP user plane connections, it is possible to flexibly control the data transmission of different 3GPP user plane connections.

In addition, data transmission control for different 3GPP user plane connections not only includes turning on or turning off, but also further includes operations under different granularities, such as 3GPP user plane connection, session, data flow, bearer, downlink and uplink, etc., thus making the data transmission control for different 3GPP user plane connections more flexible.

Further, the terminal and the core network can negotiate in advance to obtain the execution parameter or execution identification, so that on the basis that 3GPP user plane connections (PDU sessions, PDN connections, etc.) established for different RATs, different systems or different networks support fast data transmission turning on or turning off capabilities, the problem of incompatibility between different RATs, different systems or different networks is avoided.

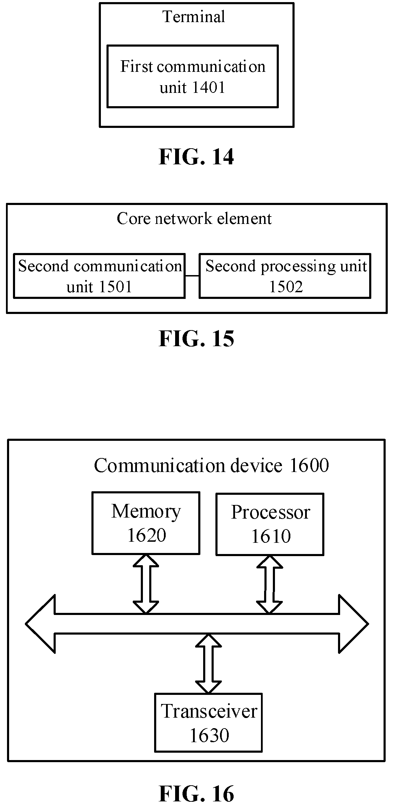

FIG. 14 is a schematic diagram of the composition structure of a terminal according to an embodiment of the present disclosure, which includes a first communication unit 1401.

The first communication unit 1401 is configured to send execution indication information, where the execution indication information indicates that data transmission control is performed on a first 3GPP user plane connection, and the first 3GPP user plane connection is one of a plurality of 3GPP user plane connections that the terminal supports to establish.

The data transmission control includes one of: turning on data transmission, turning off data transmission, or switching data transmission.

The execution indication information includes one of: an execution parameter indicating a data turning on transmission related to the first 3GPP user plane connection; an execution parameter indicating a data turning off transmission related to the first 3GPP user plane connection; an execution parameter indicating data switching related to the first 3GPP user plane connection; an execution identification indicating the data turning on transmission related to the first 3GPP user plane connection; an execution identification indicating the data turning off transmission related to the first 3GPP user plane connection; or an execution identification indicating the data switching related to the first 3GPP user plane connection.

The execution indication information further includes one of: an execution parameter indicating a target granularity of data transmission control related to the first 3GPP user plane connection, or an execution identification indicating the target granularity of the data transmission control related to the first 3GPP user plane connection, where the target granularity includes at least one of: a session, a 3GPP user plane connection, a bearer, a data flow, an uplink, or a downlink.

The execution indication information further includes one of: information related to one or more data flows performing data transmission control corresponding to the first 3GPP user plane connection, or information related to one or more bearers performing data transmission control corresponding to the first 3GPP user plane connection.

Different 3GPP user plane connections among the plurality of 3GPP user plane connections correspond to at least one difference of: a Radio Access Technology (RAT), a system type, a network type, or a network number.

The execution indication information is carried by a first request message, where the first request message is one of: a session modification request message, a connection modification request message, a service request message, a registration request message, or a tracking area update request message.

The first request message is sent via a first 3GPP control plane connection.

The first communication unit is configured to perform one of: sending the execution indication information to a first access network device corresponding to the first 3GPP user plane connection; or sending the execution indication information via the first 3GPP user plane connection.

The first communication unit is configured to send a second request message, where the second request message carries at least one of: execution capability information, a first identification, an association identification, or an identification of the first 3GPP user plane connection.

The execution capability information indicates that the terminal supports data transmission control at one or more granularities.

The first identification indicates at least one of: the terminal supports or requests establishment of a plurality of 3GPP user plane connections, the terminal supports or requests diversion of data between the plurality of 3GPP user plane connections, the terminal supports or requests migration of data between the plurality of 3GPP user plane connections, or the terminal supports or requests splitting of data between the plurality of 3GPP user plane connections.

The association identification is a same identification associated with a plurality of 3GPP user plane connections that the terminal supports or requests to establish.

The first communication unit is configured to receive a second response message, where the second response message carries execution-related parameters of an action allowing or requesting or requiring the terminal to perform.

The execution-related parameters include at least one of: an execution parameter indicating turning on data transmission; an execution parameter indicating turning off data transmission; an execution parameter indicating data switching; an execution identification indicating turning on data transmission; an execution identification indicating turning off data transmission; an execution identification indicating data switching; an execution parameter indicating one or more granularities of data transmission control; or an execution identification indicating one or more granularities of data transmission control.

The execution-related parameters further include at least one of: information related to one or more data flows, information related to one or more bearers.

The one or more granularities include at least one of: a session, a 3GPP user plane connection, a data flow, a bearer, an uplink, or a downlink.

FIG. 15 is a schematic diagram of the composition structure of a core network element according to an embodiment of the present disclosure, which includes a second communication unit 1501.

The second communication unit 1501 is configured to receive execution indication information, where the execution indication information indicates that data transmission control is performed on a first 3GPP user plane connection of a terminal, and the first 3GPP user plane connection is one of a plurality of 3GPP user plane connections that the terminal supports to establish.

The data transmission control includes one of: turning on data transmission, turning off data transmission, or switching data transmission.

The execution indication information includes one of: an execution parameter indicating a data turning on transmission related to the first 3GPP user plane connection; an execution parameter indicating a data turning off transmission related to the first 3GPP user plane connection; an execution parameter indicating data switching related to the first 3GPP user plane connection; an execution identification indicating the data turning on transmission related to the first 3GPP user plane connection; an execution identification indicating the data turning off transmission related to the first 3GPP user plane connection; or an execution identification indicating the data switching related to the first 3GPP user plane connection.

The execution indication information further includes one of: an execution parameter indicating a target granularity of data transmission control related to the first 3GPP user plane connection, or an execution identification indicating the target granularity of the data transmission control related to the first 3GPP user plane connection, where the target granularity includes at least one of: a session, a 3GPP user plane connection, a bearer, a data flow, an uplink, or a downlink.

The execution indication information further includes one of: information related to one or more data flows performing data transmission control corresponding to the first 3GPP user plane connection, or information related to one or more bearers performing data transmission control corresponding to the first 3GPP user plane connection.

As shown in FIG. 15, the core network element further includes a second processing unit 1502.

The second processing unit 1502 is configured to perform data transmission control on the first 3GPP user plane connection based on the execution indication information.

Different 3GPP user plane connections among the plurality of 3GPP user plane connections correspond to at least one difference of: a Radio Access Technology (RAT), a system type, a network type, or a network number.

The execution indication information is carried by a first request message, where the first request message is one of: a session modification request message, a connection modification request message, a service request message, a registration request message, or a tracking area update request message.

The first request message is received via a first 3GPP control plane connection.

The second communication unit is configured to perform one of: receiving the execution indication information from a first access network device corresponding to the first 3GPP user plane connection; or receiving the execution indication information via a first 3GPP user plane connection.

The second communication unit is configured to receive a second request message, where the second request message carries at least one of: execution capability information, a first identification, an association identification, or an identification of the first 3GPP user plane connection.

The execution capability information indicates that the terminal supports data transmission control at one or more granularities.

The first identification indicates at least one of: the terminal supports or requests establishment of a plurality of 3GPP user plane connections, the terminal supports or requests diversion of data between the plurality of 3GPP user plane connections, the terminal supports or requests migration of data between the plurality of 3GPP user plane connections, or the terminal supports or requests splitting of data between the plurality of 3GPP user plane connections.

The association identification is a same identification associated with a plurality of 3GPP user plane connections that the terminal supports or requests to establish.

The second communication unit is configured to send a second response message, where the second response message carries execution-related parameters of an action allowing or requesting or requiring the terminal to perform.

The execution-related parameters include at least one of: an execution parameter indicating turning on data transmission; an execution parameter indicating turning off data transmission; an execution parameter indicating data switching; an execution identification indicating turning on data transmission; an execution identification indicating turning off data transmission; an execution identification indicating data switching; an execution parameter indicating one or more granularities of data transmission control; or an execution identification indicating one or more granularities of data transmission control.

The execution-related parameters further include at least one of: information related to one or more data flows, information related to one or more bearers.

The one or more granularities include at least one of: a session, a 3GPP user plane connection, a data flow, a bearer, an uplink, or a downlink.

The device according to the embodiment of the present disclosure can realize the corresponding functions of each device in the aforementioned authentication method embodiment. The corresponding procedure, function, implementation and beneficial effect of each module (sub-module, unit or component, etc.) in the terminal or core network element can be referred to the corresponding description in the above method embodiment, and will not be described again here. Note that the functions described for each module (sub-module, unit, component, or the like) in the terminal or the core network element of the application embodiment may be realized by different modules (sub-modules, units, components, or the like), or may be realized by the same module (sub-module, unit, component, or the like).

FIG. 16 is a schematic structural diagram of a communication device 1600 according to an embodiment of the present disclosure. The communication device 1600 includes a processor 1610 that can call and execute a computer program in a memory to cause the communication device 1600 to implement the method of the embodiment of the present disclosure. In one possible implementation, the communication device 1600 may further include a memory 1620. Here, the processor 1610 may call and execute a computer program in the memory 1620 to cause the communication device 1600 to implement the method of the embodiment of the present disclosure. The memory 1620 may be a separate device independent of the processor 1610, or may be integrated in the processor 1610. In one possible implementation, the communication device 1600 may further include a transceiver 1630, and the processor 1610 may control the transceiver 1630 to communicate with other devices, specifically, may send information or data to or receive information or data from other devices. Here, transceiver 1630 may include a transmitter and a receiver. The transceiver 1630 may further include antennas, and the number of antennas may be one or more.

In a possible implementation, the communication device 1600 may be a terminal or a core network element according to the embodiment of the present disclosure, and the communication device 1600 may realize the corresponding procedure implemented by the terminal or the core network element in each method of the embodiment of the present disclosure, which will not be described again here for simplicity.

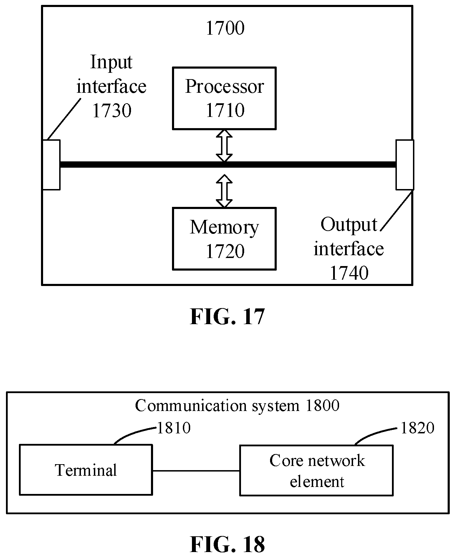

FIG. 17 is a schematic structural diagram of a chip 1700 according to an embodiment of the present disclosure. The chip 1700 includes a processor 1710 that can call and execute a computer program from a memory to implement the method in an embodiment of the present disclosure. In one possible implementation, the chip 1700 may further include a memory 1720. Here, the processor 1710 may call and execute a computer program in the memory 1720 to implement a method executed by a terminal or a core network element in the embodiment of the present disclosure. The memory 1720 may be a separate device independent of the processor 1710, or may be integrated in the processor 1710. In one possible implementation, the chip 1700 may also include an input interface 1730. Here, the processor 1710 may control the input interface 1730 to communicate with other devices or chips, and specifically, may acquire information or data from other devices or chips. In one possible implementation, the chip 1700 may also include an output interface 1740. The processor 1710 may control the output interface 1740 to communicate with other devices or chips, and specifically, may output information or data to other devices or chips.

In a possible implementation, the chip can be applied to a terminal or a core network element according to the embodiment of the present disclosure, and the chip may realize the corresponding procedure implemented by the terminal or the core network element in each method of the embodiment of the present disclosure, which will not be described again here for simplicity. It should be understood that the chip mentioned in the embodiment of the present disclosure may also be referred to as a system-level chip, a system chip, a chip system, a system-on-chip chip, or the like. The processor mentioned above may be a general-purpose processor, a Digital Signal Processor (DSP), a Field Programmable Gate Array (FPGA), an Application Specific Integrated Circuit (ASIC), or another programmable logic device, a transistor logic device, a discrete hardware component, or the like. The general-purpose processor mentioned above may be a microprocessor, any conventional processor, or the like. The memory mentioned above may be a volatile memory or a nonvolatile memory, or may include both volatile and nonvolatile memories. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a Random Access Memory (RAM). It should be understood that the described memory is illustrative but not restrictive. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (Direct Rambus RAM, DR RAM), or the like. That is, the memory in embodiments of the present disclosure is intended to include but not limited to these and any other suitable types of memory.

FIG. 18 is a schematic block diagram of a communication system 1800 according to an embodiment of the present disclosure. The communication system 1800 includes a terminal 1810 and a core network element 1820. The terminal 1810 may be used to implement the corresponding functions implemented by the terminal in the above-described method. The core network element 1820 may be used to implement the corresponding functions implemented by the core network element in the above-described method. For the sake of brevity, details will not be described here.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general-purpose computer, a dedicated computer, a computer network, or other programmable device. The computer instructions may be stored in a computer-readable storage medium or transmitted from one computer-readable storage medium to another computer-readable storage medium. For example, the computer instructions may be transmitted from one website site, computer, server or data center by wired (e.g. coaxial cable, optical fiber, Digital Subscriber Line (DSL)) or wireless (e.g. infrared, wireless, microwave, etc.) means to another website site, computer, server or data center. The computer-readable storage medium may be any available medium that can be accessed by a computer or a data storage device such as a server, a data center, or the like that incorporates one or more available media integrations. The available media may be magnetic media (e.g., a floppy disk, a hard disk, a magnetic tape), optical media (e.g., Digital Video Disc (DVD)), or semiconductor media (e.g., Solid State Disk (SSD)), etc.

It should be understood that, in the various embodiments of the disclosure, the size of the serial number of the above-mentioned processes does not mean the order of execution, and the execution order of each process should be determined by its function and internal logic, and should not constitute any limitation to the implementation process of the embodiments of the disclosure. Those skilled in the art will clearly appreciate that, for convenience and conciseness of description, the specific operating processes of the above systems, apparatuses and units may refer to the corresponding processes in the aforementioned method embodiments, which will not be repeated herein. The above descriptions are only specific implementations of the disclosure, however, the scope of protection of the disclosure is not limited thereto. Variation or replacement easily conceived by any technician familiar with this technical field within the technical scope disclosed in the disclosure, should fall within the scope of protection of the disclosure. Therefore, the scope of protection of the disclosure should be subject to the scope of protection of the claims.

## Claims

1. A method for communication, comprising:
sending, by a terminal, execution indication information, wherein the execution indication information indicates that data transmission control is performed on a first 3rd Generation Partnership Project (3GPP) user plane connection, and the first 3GPP user plane connection is one of a plurality of 3GPP user plane connections that the terminal supports to establish.

2. The method of claim 1, wherein the data transmission control comprises one of: turning on data transmission, turning off data transmission, or switching data transmission.

3. The method of claim 2, wherein the execution indication information comprises one of:
an execution parameter indicating a data turning on transmission related to the first 3GPP user plane connection;
an execution parameter indicating a data turning off transmission related to the first 3GPP user plane connection;
an execution parameter indicating data switching related to the first 3GPP user plane connection;
an execution identification indicating the data turning on transmission related to the first 3GPP user plane connection;
an execution identification indicating the data turning off transmission related to the first 3GPP user plane connection; or
an execution identification indicating the data switching related to the first 3GPP user plane connection.

4. The method of any one of claims 1 to 3, wherein the execution indication information further comprises one of: an execution parameter indicating a target granularity of data transmission control related to the first 3GPP user plane connection, or an execution identification indicating the target granularity of the data transmission control related to the first 3GPP user plane connection, wherein the target granularity comprises at least one of: a session, a 3GPP user plane connection, a bearer, a data flow, an uplink, or a downlink.

5. The method of any one of claims 1 to 4, wherein the execution indication information further comprises one of: information related to one or more data flows performing data transmission control corresponding to the first 3GPP user plane connection, or information related to one or more bearers performing data transmission control corresponding to the first 3GPP user plane connection.

6. The method of any one of claims 1 to 5, wherein different 3GPP user plane connections among the plurality of 3GPP user plane connections correspond to at least one difference of: a Radio Access Technology (RAT), a system type, a network type, or a network number.

7. The method of any one of claims 1 to 6, wherein the execution indication information is carried by a first request message, wherein the first request message is one of: a session modification request message, a connection modification request message, a service request message, a registration request message, or a tracking area update request message.

8. The method of claim 7, wherein the first request message is sent via a first 3GPP control plane connection.

9. The method of any one of claims 1 to 6, wherein sending, by the terminal, the execution indication information comprises one of:
sending, by the terminal, the execution indication information to a first access network device corresponding to the first 3GPP user plane connection; or
sending, by the terminal, the execution indication information via the first 3GPP user plane connection.

10. The method of any one of claims 1 to 9, wherein before sending, by the terminal, the execution indication information, the method further comprises:
sending, by the terminal, a second request message, wherein the second request message carries at least one of: execution capability information, a first identification, an association identification, or an identification of the first 3GPP user plane connection.

11. The method of claim 10, wherein the execution capability information indicates that the terminal supports data transmission control at one or more granularities.

12. The method of claim 10, wherein the first identification indicates at least one of: the terminal supports or requests establishment of a plurality of 3GPP user plane connections, the terminal supports or requests diversion of data between the plurality of 3GPP user plane connections, the terminal supports or requests migration of data between the plurality of 3GPP user plane connections, or the terminal supports or requests splitting of data between the plurality of 3GPP user plane connections.

13. The method of claim 10, wherein the association identification is a same identification associated with a plurality of 3GPP user plane connections that the terminal supports or requests to establish.

14. The method of any one of claims 1 to 13, wherein before sending, by the terminal, the execution indication information, the method further comprises:
receiving, by the terminal, a second response message, wherein the second response message carries execution-related parameters of an action allowing or requesting or requiring the terminal to perform.

15. The method of claim 14, wherein the execution-related parameters comprise at least one of:
an execution parameter indicating turning on data transmission;
an execution parameter indicating turning off data transmission;
an execution parameter indicating data switching;
an execution identification indicating turning on data transmission;
an execution identification indicating turning off data transmission;
an execution identification indicating data switching;
an execution parameter indicating one or more granularities of data transmission control; or
an execution identification indicating one or more granularities of data transmission control.

16. The method of claim 15, wherein the execution-related parameters further comprise at least one of: information related to one or more data flows, information related to one or more bearers.

17. The method of any one of claims 11, 15, or 16, wherein the one or more granularities comprise at least one of: a session, a 3GPP user plane connection, a data flow, a bearer, an uplink, or a downlink.

18. A method for communication, comprising:
receiving, by a core network element, execution indication information, wherein the execution indication information indicates that data transmission control is performed on a first 3rd Generation Partnership Project (3GPP) user plane connection of a terminal, and the first 3GPP user plane connection is one of a plurality of 3GPP user plane connections that the terminal supports to establish.

19. The method of claim 18, wherein the data transmission control comprises one of: turning on data transmission, turning off data transmission, or switching data transmission.

20. The method of claim 19, wherein the execution indication information comprises one of:
an execution parameter indicating a data turning on transmission related to the first 3GPP user plane connection;
an execution parameter indicating a data turning off transmission related to the first 3GPP user plane connection;
an execution parameter indicating data switching related to the first 3GPP user plane connection;
an execution identification indicating the data turning on transmission related to the first 3GPP user plane connection;
an execution identification indicating the data turning off transmission related to the first 3GPP user plane connection; or
an execution identification indicating the data switching related to the first 3GPP user plane connection.

21. The method of any one of claims 18 to 20, wherein the execution indication information further comprises one of: an execution parameter indicating a target granularity of data transmission control related to the first 3GPP user plane connection, or an execution identification indicating the target granularity of the data transmission control related to the first 3GPP user plane connection, wherein the target granularity comprises at least one of: a session, a 3GPP user plane connection, a bearer, a data flow, an uplink, or a downlink.

22. The method of any one of claims 18 to 21, wherein the execution indication information further comprises one of: information related to one or more data flows performing data transmission control corresponding to the first 3GPP user plane connection, or information related to one or more bearers performing data transmission control corresponding to the first 3GPP user plane connection.

23. The method of any one of claims 18 to 22, wherein after receiving, by the core network element, the execution indication information, the method further comprises:
performing, by the core network element, data transmission control on the first 3GPP user plane connection based on the execution indication information.

24. The method of any one of claims 18 to 23, wherein different 3GPP user plane connections among the plurality of 3GPP user plane connections correspond to at least one difference of: a Radio Access Technology (RAT), a system type, a network type, or a network number.

25. The method of any one of claims 18 to 24, wherein the execution indication information is carried by a first request message, wherein the first request message is one of: a session modification request message, a connection modification request message, a service request message, a registration request message, or a tracking area update request message.

26. The method of claim 25, wherein the first request message is received via a first 3GPP control plane connection.

27. The method of any one of claims 18 to 24, wherein receiving, by the core network element, the execution indication information comprises:
receiving, by the core network element, the execution indication information from a first access network device corresponding to the first 3GPP user plane connection; or
receiving, by the core network element, the execution indication information via a first 3GPP user plane connection.

28. The method of any one of claims 18 to 27, wherein before receiving, by the core network element, the execution indication information, the method further comprises:
receiving, by the core network element, a second request message, wherein the second request message carries at least one of: execution capability information, a first identification, an association identification, or an identification of the first 3GPP user plane connection.

29. The method of claim 28, wherein the execution capability information indicates that the terminal supports data transmission control at one or more granularities.

30. The method of claim 28, wherein the first identification indicates at least one of: the terminal supports or requests establishment of a plurality of 3GPP user plane connections, the terminal supports or requests diversion of data between the plurality of 3GPP user plane connections, the terminal supports or requests migration of data between the plurality of 3GPP user plane connections, or the terminal supports or requests splitting of data between the plurality of 3GPP user plane connections.

31. The method of claim 28, wherein the association identification is a same identification associated with a plurality of 3GPP user plane connections that the terminal supports or requests to establish.

32. The method of any one of claims 18 to 31, wherein before receiving, by the core network element, the execution indication information, the method further comprises:
sending, by the core network element, a second response message, wherein the second response message carries execution-related parameters of an action allowing or requesting or requiring the terminal to perform.

33. The method of claim 32, wherein the execution-related parameters comprise at least one of:
an execution parameter indicating turning on data transmission;
an execution parameter indicating turning off data transmission;
an execution parameter indicating data switching;
an execution identification indicating turning on data transmission;
an execution identification indicating turning off data transmission;
an execution identification indicating data switching;
an execution parameter indicating one or more granularities of data transmission control; or
an execution identification indicating one or more granularities of data transmission control.

34. The method of claim 33, wherein the execution-related parameters further comprise at least one of: information related to one or more data flows, information related to one or more bearers.

35. The method of any one of claims 29, 33, or 34, wherein the one or more granularities comprise at least one of: a session, a 3GPP user plane connection, a data flow, a bearer, an uplink, or a downlink.

36. A terminal, comprising:
a first communication unit, configured to send execution indication information, wherein the execution indication information indicates that data transmission control is performed on a first 3rd Generation Partnership Project (3GPP) user plane connection, and the first 3GPP user plane connection is one of a plurality of 3GPP user plane connections that the terminal supports to establish.

37. The terminal of claim 36, wherein the data transmission control comprises one of: turning on data transmission, turning off data transmission, or switching data transmission.

38. The terminal of claim 37, wherein the execution indication information comprises one of: an execution parameter indicating a data turning on transmission related to the first 3GPP user plane connection; an execution parameter indicating a data turning off transmission related to the first 3GPP user plane connection; an execution parameter indicating data switching related to the first 3GPP user plane connection; an execution identification indicating the data turning on transmission related to the first 3GPP user plane connection; an execution identification indicating the data turning off transmission related to the first 3GPP user plane connection; or an execution identification indicating the data switching related to the first 3GPP user plane connection.

39. The terminal of any one of claims 36 to 38, wherein the execution indication information further comprises one of: an execution parameter indicating a target granularity of data transmission control related to the first 3GPP user plane connection, or an execution identification indicating the target granularity of the data transmission control related to the first 3GPP user plane connection, wherein the target granularity comprises at least one of: a session, a 3GPP user plane connection, a bearer, a data flow, an uplink, or a downlink.

40. The terminal of any one of claims 36 to 39, wherein the execution indication information further comprises one of: information related to one or more data flows performing data transmission control corresponding to the first 3GPP user plane connection, or information related to one or more bearers performing data transmission control corresponding to the first 3GPP user plane connection.

41. The terminal of any one of claims 36 to 40, wherein different 3GPP user plane connections among the plurality of 3GPP user plane connections correspond to at least one difference of: a Radio Access Technology (RAT), a system type, a network type, or a network number.

42. The terminal of any one of claims 36 to 41, wherein the execution indication information is carried by a first request message, wherein the first request message is one of: a session modification request message, a connection modification request message, a service request message, a registration request message, or a tracking area update request message.

43. The terminal of claim 42, wherein the first request message is sent via a first 3GPP control plane connection.

44. The terminal of any one of claims 36 to 41, wherein the first communication unit is configured to perform one of: sending the execution indication information to a first access network device corresponding to the first 3GPP user plane connection; or sending the execution indication information via the first 3GPP user plane connection.

45. The terminal of any one of claims 36 to 44, wherein the first communication unit is configured to send a second request message, wherein the second request message carries at least one of: execution capability information, a first identification, an association identification, or an identification of the first 3GPP user plane connection.

46. The terminal of claim 45, wherein the execution capability information indicates that the terminal supports data transmission control at one or more granularities.

47. The terminal of claim 45, wherein the first identification indicates at least one of: the terminal supports or requests establishment of a plurality of 3GPP user plane connections, the terminal supports or requests diversion of data between the plurality of 3GPP user plane connections, the terminal supports or requests migration of data between the plurality of 3GPP user plane connections, or the terminal supports or requests splitting of data between the plurality of 3GPP user plane connections.

48. The terminal of claim 45, wherein the association identification is a same identification associated with a plurality of 3GPP user plane connections that the terminal supports or requests to establish.

49. The terminal of any one of claims 36 to 48, wherein the first communication unit is configured to receive a second response message, wherein the second response message carries execution-related parameters of an action allowing or requesting or requiring the terminal to perform.

50. The terminal of claim 49, wherein the execution-related parameters comprise at least one of: an execution parameter indicating turning on data transmission; an execution parameter indicating turning off data transmission; an execution parameter indicating data switching; an execution identification indicating turning on data transmission; an execution identification indicating turning off data transmission; an execution identification indicating data switching; an execution parameter indicating one or more granularities of data transmission control; or an execution identification indicating one or more granularities of data transmission control.

51. The terminal of claim 50, wherein the execution-related parameters further comprise at least one of: information related to one or more data flows, information related to one or more bearers.

52. The terminal of any one of claims 46, 50, or 51, wherein the one or more granularities comprise at least one of: a session, a 3GPP user plane connection, a data flow, a bearer, an uplink, or a downlink.

53. A core network element, comprising:
a second communication unit, configured to receive execution indication information, wherein the execution indication information indicates that data transmission control is performed on a first 3rd Generation Partnership Project (3GPP) user plane connection of a terminal, and the first 3GPP user plane connection is one of a plurality of 3GPP user plane connections that the terminal supports to establish.

54. The core network element of claim 53, wherein the data transmission control comprises one of: turning on data transmission, turning off data transmission, or switching data transmission.

55. The core network element of claim 54, wherein the execution indication information comprises one of: an execution parameter indicating a data turning on transmission related to the first 3GPP user plane connection; an execution parameter indicating a data turning off transmission related to the first 3GPP user plane connection; an execution parameter indicating data switching related to the first 3GPP user plane connection; an execution identification indicating the data turning on transmission related to the first 3GPP user plane connection; an execution identification indicating the data turning off transmission related to the first 3GPP user plane connection; or an execution identification indicating the data switching related to the first 3GPP user plane connection.

56. The core network element of any one of claims 53 to 55, wherein the execution indication information further comprises one of: an execution parameter indicating a target granularity of data transmission control related to the first 3GPP user plane connection, or an execution identification indicating the target granularity of the data transmission control related to the first 3GPP user plane connection, wherein the target granularity comprises at least one of: a session, a 3GPP user plane connection, a bearer, a data flow, an uplink, or a downlink.

57. The core network element of any one of claims 53 to 56, wherein the execution indication information further comprises one of: information related to one or more data flows performing data transmission control corresponding to the first 3GPP user plane connection, or information related to one or more bearers performing data transmission control corresponding to the first 3GPP user plane connection.

58. The core network element of any one of claims 53 to 57, further comprising:
a second processing unit, configured to perform data transmission control on the first 3GPP user plane connection based on the execution indication information.

59. The core network element of any one of claims 53 to 58, wherein different 3GPP user plane connections among the plurality of 3GPP user plane connections correspond to at least one difference of: a Radio Access Technology (RAT), a system type, a network type, or a network number.

60. The core network element of any one of claims 53 to 59, wherein the execution indication information is carried by a first request message, wherein the first request message is one of: a session modification request message, a connection modification request message, a service request message, a registration request message, or a tracking area update request message.

61. The core network element of claim 60, wherein the first request message is received via a first 3GPP control plane connection.

62. The core network element of any one of claims 53 to 59, wherein the second communication unit is configured to perform one of: receiving the execution indication information from a first access network device corresponding to the first 3GPP user plane connection; or receiving the execution indication information via a first 3GPP user plane connection.

63. The core network element of any one of claims 53 to 62, wherein the second communication unit is configured to receive a second request message, wherein the second request message carries at least one of: execution capability information, a first identification, an association identification, or an identification of the first 3GPP user plane connection.

64. The core network element of claim 63, wherein the execution capability information indicates that the terminal supports data transmission control at one or more granularities.

65. The core network element of claim 63, wherein the first identification indicates at least one of: the terminal supports or requests establishment of a plurality of 3GPP user plane connections, the terminal supports or requests diversion of data between the plurality of 3GPP user plane connections, the terminal supports or requests migration of data between the plurality of 3GPP user plane connections, or the terminal supports or requests splitting of data between the plurality of 3GPP user plane connections.

66. The core network element of claim 63, wherein the association identification is a same identification associated with a plurality of 3GPP user plane connections that the terminal supports or requests to establish.

67. The core network element of any one of claims 53 to 66, wherein the second communication unit is configured to send a second response message, wherein the second response message carries execution-related parameters of an action allowing or requesting or requiring the terminal to perform.

68. The core network element of claim 67, wherein the execution-related parameters comprise at least one of: an execution parameter indicating turning on data transmission; an execution parameter indicating turning off data transmission; an execution parameter indicating data switching; an execution identification indicating turning on data transmission; an execution identification indicating turning off data transmission; an execution identification indicating data switching; an execution parameter indicating one or more granularities of data transmission control; or an execution identification indicating one or more granularities of data transmission control.

69. The core network element of claim 68, wherein the execution-related parameters further comprise at least one of: information related to one or more data flows, information related to one or more bearers.

70. The core network element of any one of claims 64, 68, or 69, wherein the one or more granularities comprise at least one of: a session, a 3GPP user plane connection, a data flow, a bearer, an uplink, or a downlink.

71. A terminal, comprising: a transceiver, a processor and a memory, the memory being configured to store a computer program, the transceiver being configured to communicate with other devices, the processor being configured to call and execute the computer program stored in the memory to cause the terminal to perform the method of any one of claims 1 to 17.

72. A core network element, comprising: a transceiver, a processor and a memory, the memory being configured to store a computer program, the transceiver being configured to communicate with other devices, the processor being configured to call and execute the computer program stored in the memory to cause the core network element to perform the method of any one of claims 18 to 35.

73. A chip, comprising: a processor for calling and executing a computer program in a memory, causing a device installed with the chip to perform the method of any one of claims 1 to 17, or the method of any one of claims 18 to 35.

74. A computer-readable storage medium for storing a computer program that, when executed by a device, causes the device to perform the method of any one of claims 1 to 17, or the method of any one of claims 18 to 35.

75. A computer program product comprising computer program instructions that cause a computer to perform the method of any one of claims 1 to 17, or the method of any one of claims 18 to 35.

76. A computer program causing a computer to perform the method of any one of claims 1 to 17, or the method of any one of claims 18 to 35.
